# EUROPÄISCHE PATENTSCHRIFT

(11) **EP 4 188 761 B1**
(45) Veröffentlichungstag und Bekanntmachung des Hinweises auf die Patenterteilung: **18.02.2026**
(21) Anmeldenummer: 21751573.3
(22) Anmeldetag: 28.07.2021
(51) Int. Cl.: B60T 8/175

(54) **VERFAHREN ZUR ANTRIEBSREGELUNG EINES KRAFTFAHRZEUGS MIT EINZELRADANTRIEB, ANTRIEBSREGELEINRICHTUNG, ANTRIEBSSTRANG UND KRAFTFAHRZEUG**
METHOD OF DRIVE CONTROL OF A VEHICLE WITH SINGLE WHEEL DRIVE, DRIVE CONTROL UNIT, POWERTRAIN AND VEHICLE
MÉTHODE DE COMMANDE DE PROPULSION D'UN VÉHICLE DISTRIBUÉE SUR CHAQUE ROUE SÉPARÉMENT COMPORTANT UN GROUPE MOTOPROPULSEUR, UN CALCULATEUR ET UN VÉHICULE

(30) Priorität: 29.07.2020 DE 102020119994; 19.02.2021 DE 102021104035
(43) Veröffentlichungstag der Anmeldung: 07.06.2023
(73) Patentinhaber: PIËCH IP AG, 6052 Hergiswil NW (CH)
(72) Erfinder: SCHMIDT, Klaus, 6006 Luzern (CH)
(74) Vertreter: Grünecker Patent- und Rechtsanwälte PartG mbB
(86) Internationale Anmeldenummer: PCT/EP2021/071206
(87) Internationale Veröffentlichungsnummer: WO 2022/023444

(56) Entgegenhaltungen:
- WO-A1-2017/044741
- US-A1- 2009 112 436

## Beschreibung

Die Erfindung betrifft zwei Verfahren zur Antriebsregelung eines Kraftfahrzeugs mit Einzelradantrieb an zwei Fahrzeugrädern, einem ersten Sensor und einem zweiten Sensor mittels einer Regeleinheit, wobei die Regeleinheit eine Auswerteinheit und eine Steuereinheit aufweist. Die Erfindung betrifft zudem eine Antriebsregeleinrichtung zur Antriebsregelung eines Kraftfahrzeugs mit Einzelradantrieb an zwei Fahrzeugrädern, insbesondere nach einem der vorgenannten Verfahren. Die Erfindung betrifft weiterhin einen Antriebsstrang für ein Kraftfahrzeug mit einer solchen Antriebsregeleinrichtung sowie ein Kraftfahrzeug mit einem solchen Antriebstrang.

Das in Rede stehende Kraftfahrzeug kann dabei jedweder Art und Ausgestaltung eines Kraftfahrzeugs entsprechen. Dabei handelt es sich insbesondere um ein Automobil mit einem Gewicht von weniger als 3,5 t, beispielsweise ein Sportwagen, ein Coupé, ein Kombinationskraftwagen oder ein Sport Utility Vehicle (SUV).

Bei Kraftfahrzeugen sind aus dem Stand der Technik bereits Verfahren bekannt, die darauf abzielen, an einzelnen Fahrzeugrädem anliegende Drehzahlen und Drehmomente zu regeln, um eine gute Traktion eines jeden Fahrzeugrads sicherzustellen. Beispielsweise sind Verfahren bekannt, die eine solche Traktion beim Anfahren, bei einem Bremsvorgang, während einer Kurvenfahrt oder auf anspruchsvollem Untergrund wie Eis, Sand oder Geröll überwachen und sicherstellen.

Die Traktion an einem Fahrzeugrad hängt insbesondere von dem Schlupf des Fahrzeugrads gegenüber dem Untergrund ab. Schlupf stellt sich während der Fahrt, insbesondere beim Beschleunigen oder Bremsen eines Fahrzeugrads ein, sollte aber unterhalb gewisser Grenzwerte gehalten werden, um eine gute Traktion zu erreichen und die Fähigkeit des Fahrzeugrads, Kraft auf den Untergrund zu übertragen sowie die Seitenführungsfähigkeit des Fahrzeugrads zu erhalten. Diese Fähigkeiten sinken bei Überschreiten der Grenzwerte und darüber hinaus zunehmendem Schlupf ab und gehen bei einem Überschreiten der Kraftschlussgrenze und damit einhergehendem Durchdrehen bzw. Blockieren des Fahrzeugrads gänzlich oder weitestgehend gänzlich verloren.

Bei allen modernen Fahrzeugen ist beispielsweise ein sogenanntes Antiblockiersystem (ABS) verbaut, das bei einem Bremsvorgang die Bremse kurzzeitig löst, wenn ein drohendes Blockieren eines Fahrzeugrads droht. Auf diese Weise bleibt das Kraftfahrzeug bei einerstarken Bremsung dank der erhaltenen Seitenführungsfähigkeit der Räder lenkbar und kommt schneller zum Stehen als bei blockierten Fahrzeugrädern. Ergänzend zu ABS sind beispielsweise Verfahren zum Aufteilen des Bremsdrucks auf die Fahrzeugräder bekannt.

Weiterhin sind Fahrzeuge, bei denen eine Antriebsvorrichtung auf ein Fahrzeugräderpaar oder im Sinne eines Allradantriebs auf alle Fahrzeugräder wirkt, üblicherweise mit Differenzialen ausgestattet, die eine unterschiedliche Drehzahl zweier Fahrzeugräder eines Fahrzeugräderpaars erlauben, etwa, um in einer Kurvenfahrt den verschiedenen Radien zu entsprechen, auf denen die Fahrzeugräder entlangrollen. Ohne ein Differenzial und somit zwangsläufig gleicher Drehzahl eines Fahrzeugräderpaars würde mindestens eines der Räder während einer solchen Kurvenfahrt schlupfen.

Weiterhin offenbaren WO 2017/044741 A1 und US 2009112436 A1 Fahrzeuge, bei denen Räder angetrieben werden, jedoch zumindest die Merkmale des kennzeichnenden Teils von Anspruch 1 und 2 nicht vorgesehen sind.

Bei vorbeschriebenen Kraftfahrzeugen ist der Aufbau des Antriebsstrangs komplex und erfordert einen hohen Kostenaufwand. Insbesondere erfordert ein solcher Antriebsstrang eine hohe Anzahl an Bauteilen und Baugruppen, was auch zu einer erhöhten Fehleranfälligkeit führt.

Es ist aus dem Stand der Technik ferner auch bekannt, Antriebsvorrichtungen zum Einzelradantrieb an zumindest zwei Fahrzeugrädern vorzusehen, die unmittelbar oder mittelbar über ein Getriebe zum Antrieb des jeweiligen Fahrzeugrads vorgesehen sind.

Der hier vorliegenden Erfindung liegt die Aufgabe zugrunde, dem Stand der Technik eine Verbesserung oder eine Alternative zur Seite zu stellen. Diese Aufgabe wird jeweils durch ein Verfahren nach einem ersten Erfindungsaspekt gemäß Anspruch 1 sowie nach einem zweiten Erfindungsaspekt gemäß Anspruch 2, durch eine Antriebsregeleinrichtung nach einem dritten Erfindungsaspekt gemäß Anspruch 13, durch einen Antriebsstrang nach einem vierten Erfindungsaspekt gemäß Anspruch 14, sowie durch ein Kraftfahrzeug nach einem fünften Erfindungsaspekt gelöst. Vorteilhafte Ausgestaltungen sind in den Unteransprüchen angegeben.

Es sei ausdrücklich darauf hingewiesen, dass im Rahmen der hier vorliegenden Patentanmeldung unbestimmte Artikel und unbestimmte Zahlenangaben wie "ein...", "zwei..." usw. im Regelfall als mindestens-Angaben zu verstehen sein sollen, also als "mindestens ein...", "mindestens zwei..." usw., sofern sich nicht etwa aus dem Kontext oder dem konkreten Text einer bestimmten Stelle ergibt, dass etwa dort nur "genau ein...", "genau zwei..." usw. gemeint sein soll.

Weiterhin sind alle Zahlenangaben sowie Angaben zu Verfahrensparametern und/oder Vorrichtungsparametern im technischen Sinne zu verstehen, d.h. als mit den üblichen Toleranzen versehen zu verstehen. Auch aus der expliziten Angabe der Einschränkung "wenigstens" oder "mindestens" o.ä. darf nicht geschlossen werden, dass bei der einfachen Verwendung von "ein", also ohne die Angabe von "wenigstens" o.ä., ein "genau ein" gemeint ist.

Soweit Elemente mit Hilfe einer Nummerierung bezeichnet sind, also beispielsweise "erstes Bauteil", "zweites Bauteil" und "drittes Bauteil", so ist diese Nummerierung rein zur Differenzierung in der Bezeichnung vorgesehen und stellt keine Abhängigkeit der Elemente voneinander oder eine zwingende Reihenfolge der Elemente dar. Das heißt, dass beispielsweise eine Vorrichtung nicht ein "erstes Bauteil" aufweisen muss, um ein "zweites Bauteil" aufweisen zu können. Auch kann die Vorrichtung ein "erstes Bauteil", sowie ein "drittes Bauteil" umfassen, ohne aber zwangsläufig ein "zweites Bauteil" aufzuweisen.

Der erste Erfindungsaspekt betrifft ein Verfahren zur Antriebsregelung eines Kraftfahrzeugs mit Einzelradantrieb an zwei Fahrzeugrädern und einem ersten Sensor mittels einer Regeleinheit, wobei die Regeleinheit eine Auswerteinheit und eine Steuereinheit aufweist, und wobei das Verfahren die Schritte umfasst:
a. Erfassen von Ist-Fahrzeugdaten mittels des ersten Sensors, insbesondere an Fahrzeugrädern,
b. Empfangen und Auswerten der Ist-Fahrzeugdaten mittels der Auswerteeinheit, wobei auf der Auswerteeinheit ein Maximal-Fahrzeugwert, insbesondere Maximai-Schlupf hinterlegt ist,
c. Ermitteln eines Ist-Fahrzeugwerts, insbesondere eines Ist-Schlupfs, aus den Ist-Fahrzeugdaten mittels der Auswerteeinheit,
d. Vergleichen des ermittelten Ist-Fahrzeugwerts mit dem Maximal-Fahrzeugwert, insbesondere dem Maximai-Schlupf, mittels der Auswerteeinheit,
e. Übermitteln einer Anweisung zu einer Aktion von der Auswerteeinheit an die Steuereinheit bei Überschreiten des Maximai-Fahrzeugwerts durch den Ist-Fahrzeugwert,
f. Ausführen der Aktion durch die Steuereinheit.

### Begrifflich sei hierzu folgendes erläutert:

Als Regelung wird ein Verfahren mit mehreren Schritten verstanden, wobei ein Istwert mit einem Sollwert verglichen wird und in Abhängigkeit der Differenz und/oder des Verhältnisses der zwei Werte eine Aktion, insbesondere eine Regelaktion, ausgeführt wird, wobei die Differenz und/oder das Verhältnis auch die Intensität der Aktion bestimmen können. Eine Regelung wird als insbesondere schnelle Folge von Schleifen ausgeführt, wobei in jeder Schleife Schritte des Verfahrens, insbesondere alle Schritte des Verfahrens, durchgeführt werden. Es werden jedoch nicht notwendigerweise alle Schritte eines Regelverfahrens in jeder Schleife durchgeführt, sondern können beispielsweise einmalig oder nur jeweils bei einer bestimmten Wiederholungsanzahl an Schleifen durchgeführt werden. In jeder Schleife kann eine Änderung der Aktion erfolgen, insbesondere dann, wenn die Durchführung der Aktion in der vorherigen Schleife zu einer Veränderung der Differenz bzw. des Verhältnisses zwischen Ist- und Sollwert geführt hat. Eine Änderung ist beispielsweise die Änderung der Intensität der Aktion oder deren Aufhebung. Es können auch mehrere Aktionen gleichzeitig ausgeführt werden.

Als Einzelradantrieb wird ein Antrieb verstanden, der lediglich auf ein einzelnes Fahrzeugrad wirkt und mechanisch nicht antriebswirksam auf weitere Fahrzeugräder wirkt bzw. von dem Antriebzustand anderer Fahrzeugräder nicht unmittelbar beeinflusst wird.

Das Kraftfahrzeug weist bevorzugt zwei Fahrzeugrad paare auf, deren jeweilige Fahrzeugräder auf der gleichen Rotationsachse, insbesondere auf der gleichen Radwelle oder Radachse angeordnet sind und jeweils an sich gegenüberliegenden Außenseiten des Kraftfahrzeugs angeordnet sind. Bevorzugt weist das Kraftfahrzeug ein Fahrzeugfronträderpaar und ein Fahrzeugheckräderpaar auf.

Als Regeleinheit wird eine Vorrichtung verstanden, mittels der ein Regelverfahren durchgeführt werden kann und die insbesondere zum Empfangen, Verarbeitung und Senden von Signalen, insbesondere digitalen Signalen geeignet ist. Eine Regeleinheit ist beispielsweise als Microcontroller und/oder integrierter Schaltkreis ausgestaltet.

Als Auswerteeinheit wird eine Vorrichtung verstanden, mittels der eine Auswertung von Signalen möglich ist, insbesondere in Form eines Vergleichs der Signale miteinander oder in Form einer Rechnung mit diesen Signalen. Eine Auswerteeinheit ist üblicherweise zum Empfangen, Verarbeiten und Senden von Signalen, insbesondere digitalen Signalen geeignet und ist beispielsweise als Microcontroller und/oder integrierter Schaltkreis ausgestaltet.

Als Steuereinheit wird eine Vorrichtung verstanden, mittels der eine Steuerung ausgeführt werden kann, mittels der also ein technisches System beeinflusst werden kann. Eine Steuereinheit ist üblicherweise zum Empfangen, Verarbeiten und Senden von Signalen, insbesondere digitalen Signalen geeignet und ist beispielsweise als Microcontroller und/oder integrierter Schaltkreis ausgestaltet. Die Steuerung wirkt bevorzugt auf zumindest eine Antriebsvorrichtung, eine Bremse und/oder ein Getriebe.

Die Auswerteeinheit und die Steuereinheit können mit der Regeleinheit zusammenfallen, so dass die Regeleinheit als eine Schaltung ausgeführt ist, mit der die Funktionen der Auswertesowie der Steuereinheit ausgeführt werden. Insofern ist der Umstand, dass die Regeleinheit eine Auswerteinheit und eine Steuereinheit auffasst, so zu verstehen, dass die Regeleinheit die Funktionalitäten einer Auswerteeinheit und einer Steuereinheit aufweist. Die Auswerteeinheit und die Steuereinheit können alternativ auch voneinander separate Bauteile aufweisen.

Ist-Fahrzeugdaten im Sinne der vorliegenden Erfindung geben Informationen über am Kraftfahrzeug messbare physikalische Größen, wie etwa Drehzahlen, Geschwindigkeiten, Kräfte, Momente, Drücke, Strecken, Beschleunigungen oder Verzögerungen wieder. Ist-Fahrzeugdaten können ferner Informationen über eine Differenz und/oder ein Verhältnis zweier solcher physikalischen Größen wiedergeben. Ist-Fahrzeugdaten sind mittels Sensoren direkt oder indirekt messbar und werden üblicherweise in jeder Schleife eines Regelverfahrens erfasst. Ein entsprechender Sensor ist beispielsweise ein Drehzahl-, Geschwindigkeits-, Kraft-, Momenten-, Druck-, Weg- oder Beschleunigungssensor.

Im Folgenden ist unter einem "Überschreiten" ein Überschreiten des Maximal-Fahrzeugwert durch den Ist-Fahrzeugwert und unter einem "Unterschreiten" ein Unterschreiten des Maximal-Fahrzeugwert durch den Ist-Fahrzeugwert zu verstehen, soweit nicht anderweitig ausgeführt.

Ein Ist-Fahrzeugwert ist ein aus den Ist-Fahrzeugdaten ermittelbarer Wert, der entweder in den Ist-Fahrzeugdaten wiedergegebene Größe oder eine abgeleitete Größe, die sich aus den Ist-Fahrzeugdaten mittels Datenverarbeitung ergibt, ist. Eine abgeleitete Größe ist insbesondere eine Differenz, etwa eine Differenzgeschwindigkeit, oder ein Verhältnis. Ein Fahrzeugwert wird üblicherweise in jeder Schleife eines Regelverfahrens ermittelt, kann aber alternativ jeweils bei einer bestimmten Wiederholungsanzahl an Schleifen ermittelt werden.

Als Maximal-Fahrzeugwert wird ein Grenzwert verstanden, der im Vergleich mit dem Ist-Fahrzeugwert als Referenz dient, wobei innerhalb eines Regelverfahrens aus einem Unterschreiten eine andere Schlussfolgerung und gegebenenfalls eine andere Aktion abgleitet wird als aus einem Überschreiten. Ist der Ist-Fahrzeugwert gleich dem Maximal-Fahrzeugwert, so ist dies wahlweise dem Unterschreiten oder dem Überschreiten zuzurechnen, wobei der Maximalwert entsprechend zu wählen ist.

Als Aktion wird eine Beeinflussung eines technischen Systems verstanden, die beliebig ausgestaltet sein kann. Insbesondere ist eine Aktion eine Veränderung einer Einstellung, insbesondere eines Drehmoments, einer Antriebsvorrichtung, insbesondere an einem Einzelradantrieb.

Als Ausführen der Aktion durch die Steuereinheit wird verstanden, dass die Steuereinheit der Anweisung entsprechend technische Systeme des Kraftfahrzeugs beeinflusst, etwa einer Antriebsvorrichtung ein erhöhtes oder verringertes Drehmoment zuweist und insbesondere entsprechende Signale an diese Antriebsvorrichtung übermittelt.

Mittels dem Verfahren nach dem ersten Erfindungsaspekt sind die Einzelradantriebe miteinander auf vorteilhafte Weise zum Antrieb des Kraftfahrzeugs nutzbar, so dass das Kraftfahrzeug effektiv und sicher betrieben werden kann.

Der zweite Erfindungsaspekt betrifft ein Verfahren zur Antriebsregelung eines Kraftfahrzeugs mit Einzelradantrieb an zwei Fahrzeugrädern, einem ersten Sensor und einem zweiten Sensor mittels einer Regeleinheit, wobei die Regeleinheit eine Auswerteinheit und eine Steuereinheit aufweist, und wobei das Verfahren die Schritte umfasst:
a. Erfassen von Ist-Fahrzeugdaten mittels des ersten Sensors, insbesondere an Fahrzeugrädern,
b. Erfassen einer Fahranforderung mittels des zweiten Sensors,
c. Empfangen und Auswerten der Ist-Fahrzeugdaten sowie der Fahranforderung mittels der Auswerteinheit, wobei auf der Auswerteeinheit ein Maximal-Fahrzeugwert, insbesondere Maximal-Schlupf hinterlegt ist,
d. Ermitteln eines physikalischen Ist-Fahrzeugwerts, insbesondere eines Ist-Schlupfs mittels der Auswerteeinheit,
e. Vergleichen des ermittelten Ist-Fahrzeugwerts mit dem Maximal-Fahrzeugwert, insbesondere dem Maximai-Schlupf, mittels der Auswerteeinheit,
f. Übermitteln einer Anweisung zu einer Aktion von der Auswerteeinheit an die Steuereinheit bei Überschreiten oder auf Grund der Fahranforderung drohendem Überschreiten des MaximaiFahrzeugwerts durch den Ist-Fahrzeugwert,
g. Ausführen der Aktion durch die Steuereinheit.

Begrifflich sei hierzu ergänzend zu den obigen Ausführungen bezüglich der Begrifflichkeiten des ersten Erfindungsaspekts, die auch bezüglich des zweiten Erfindungsaspekts zu verstehen sind, folgendes erläutert:
Eine Fahranforderung ist im Sinne der vorliegenden Erfindung ein Steuerbefehl zum Verändern des Fahrzeugzustands, beispielsweise zum Verändern der Fahrgeschwindigkeit. Eine Fahranforderung wird beispielsweise von einer Bedienperson manuell eingegeben, etwa durch Betätigen eines Pedals oder durch Verändern einer eingestellten Geschwindigkeit an einer Geschwindigkeitsregelvorrichtung. Weiterhin beispielsweise wird eine Fahranforderung alternativ und/oder ergänzend durch eine Fahrzeugsteuerung eingegeben, etwa durch eine insbesondere adaptive Geschwindigkeitsregelvorrichtung, ein Abstandshaltesystem, einen Einparkassistenten, einen Notbremsassistenten und/oder einen Spurhalteassistenten.

Als drohendes Überschreiten wird es verstanden, wenn auf Grundlage einer Prognose absehbar ist oder erscheint, dass eine Fahranforderung zu einer Veränderung des Ist-Fahrzeugwerts führt, so dass dann ein Überschreiten vorläge. Eine solche Prognose wird beispielsweise aus einer Extrapolierung oder einer simulativen Berechnung erhalten, die beispielsweise die Auswerteeinheit auf Grundlage von Ist- Fahrzeugdaten und/oder fahrzeugexternen Daten wie etwa Wetterbedingungen, Fahruntergrund, Fahrbahnverlauf und/oder Geschwindigkeitsbeschränkungen erstellt. Eine solche Prognose wird in einer Ausführungsform dauerhaft, also wiederkehrend in kurzen Zeitabständen, berechnet und aktualisiert.

Mittels dem Verfahren nach dem zweiten Erfindungsaspekt sind die Einzelradantriebe miteinander auf vorteilhafte Weise zum Antrieb des Kraftfahrzeugs nutzbar, so dass das Kraftfahrzeug effektiv und sicher betrieben werden kann. Weiterhin können mit dem Verfahren nach dem zweiten Erfindungsaspekt gefährliche oder unkomfortable Fahrsituationen vorausschauend vermieden werden.

Als Fahrsituation wird die Summe aller Umstände verstanden, die das Kraftfahrzeug beeinflussen, also beispielsweise der Fahruntergrund, der Fahrbahnverlauf, ein Tempolimit, die Fahrzeuggeschwindigkeit, -beschleunigung oder-Verzögerung oder der Zustand der Fahrzeugräder.

Besonders bevorzugt werden bei den Verfahren nach dem ersten oder zweiten Erfindungsaspekt als Ist-Fahrzeugdaten solche erfasst, aus denen sich der Ist-Schlupf an zumindest einem Fahrzeugrad ermitteln lässt, also etwa die Drehzahl des Fahrzeugrads sowie die Relativgeschwindigkeit des Kraftfahrzeugs zum Untergrund. Es wird dann durch die Auswerteeinheit aus den Ist-Fahrzeugdaten der Ist-Schlupf des Fahrzeugrads ermittelt und mit einem Maximal-Schlupf verglichen. Vorteilhaft kann mittels des Schlupfs als Regelgröße auf die Traktions- sowie Seitenführungsfähigkeit der Räder zurückgeschlossen werden, so dass ein sicheres und stabiles Fahrverhalten sichergestellt wird.

Besonders bevorzugt wird der Ist-Schlupf für alle mittels Einzelradantrieb angetriebenen Fahrzeugrädern ermittelt. So kann detektiert werden, wenn sich der Schlupf aufgrund einer asymmetrischen Anforderung oder Belastung dieser Fahrzeugräder nur an einzelnen dieser Fahrzeugräder verändert, beispielsweise während einer Kurvenfahrt. Mit dem so ausgestalteten Verfahren ist dann eine Differenzialfunktion zwischen diesen Fahrzeugrädern geschaffen.

In einer Ausführungsform des zweiten Erfindungsaspekts wird von der Auswerteeinheit an die Steuereinheit eine Anweisung zu einer Aktion übermittelt, wenn ein Überschreiten des Maximal-Fahrzeugwerts durch den Ist-Fahrzeugwert auf Grund einer bevorstehenden Änderung einer Fahrsituation des Kraftfahrzeugs droht. Es wird dann beispielsweise eine Aktion ausgeführt, wenn die Einfahrt in eine Kurve bevorsteht und auch ohne Fahranforderung ein Überschreiten droht. Auf diese Weise können gefährliche oder unkomfortable Fahrsituationen vorausschauend besser vermieden werden.

In einer bevorzugten Ausführungsform eines Verfahrens nach dem ersten oder zweiten Erfindungsaspekt wird das Verfahren, insbesondere mehrfach pro Sekunde, wiederholt und ohne Durchführen einer Aktion erneut ausgeführt, wenn der Ist-Fahrzeugwert den Maximal-Fahrzeugwert ausreichend unterschreitet. Durch eine Wiederholung insbesondere in schneller Folge wird eine dauerhafte Überwachung realisiert, die auch sehr schnelle Änderungen von Fahrzeugzuständen erfasst. Als ausreichendes Unterschreiten wird im Sinne des ersten Erfindungsaspekts jegliches Unterschreiten verstanden, im Sinne des zweiten Erfindungsaspekts ein Unterschreiten, bei dem mit Blick auf eine Fahranforderung und/oder eine bevorstehende Änderung einer Fahrsituation des Kraftfahrzeugs kein Überschreiten zu erwarten ist.

In dem Verfahren nach dem ersten oder zweiten Erfindungsaspekt wird der Ist-Fahrzeugwert, insbesondere Ist-Schlupf, je angetriebenen Fahrzeugrad ermittelt und mittels der Äuswerteeinheit jeweils mit einem diesem Fahrzeugrad zugeordneten Maximal-Fahrzeugwert, insbesondere Maximal-Schlupf, verglichen. Auf diese Weise kann die Traktions- und Seitenführungsfähigkeit der angetriebenen Fahrzeugräder sichergestellt und ein sicheres und stabiles Fahrverhalten des Kraftfahrzeugs erreicht werden. Es wird der Ist-Fahrzeugwert für alle mittels Einzelradantrieb angetriebenen Fahrzeugräder ermittelt und mit einem jeweiligen Maximal-Fahrzeugwert verglichen.

In einer bevorzugten Ausführungsform des Verfahrens gemäß dem ersten oder zweiten Erfindungsaspekt wird nach dem Ausführen einer Aktion über eine definierte Zeitspanne bei weiterhin bestehendem Überschreiten oder weiterhin drohendem Überschreiten des Maximai-Fahrzeugwerts durch den Ist-Fahrzeugwert eine Anweisung zu einer weiteren Aktion von der Auswerteeinheit an die Steuereinheit übermittelt und die Steuereinheit führt die weitere Aktion aus. Dabei kann es sich um die gleiche Aktion in einer stärkeren oder geringeren Intensität handeln oder es handelt sich um eine andere Aktion, insbesondere um eine solche, die einen stärkeren Eingriff in das Fahrverhalten des Kraftfahrzeugs darstellt. Auf diese Weise ist das Verfahren so aufgebaut, dass ein Eingriff stufenweise erfolgt und insbesondere mit jeder Stufe zunehmend intensiv ist. Es ist dann ein jeweils möglichst geringer Eingriff erreicht, der jedoch gleichzeitig sicher und effektiv einem Überschreiten entgegenwirkt.

In demVerfahren nach dem ersten oder zweiten Erfindungsaspekt ist eine Aktion eine Veränderung eines Drehmomentes an einem Fahrzeugrad, insbesondere an einem Fahrzeugrad, an dem ein Überschreiten des Maximal-Fahrzeugwert durch den Ist-Fahrzeugwert vorliegt oder droht. Eine Veränderung kann beispielsweise eine Erhöhung oder Reduktion des Drehmoments sein. Eine je nach Fahrsituation gewählte Veränderung des Drehmoments kann das Fahrzeugrad entlasten, so dass ein Überschreiten ausgeglichen bzw. vermieden wird. Das Drehmoment kann auch an einem anderen Fahrzeugrad als dem, an dem ein Überschreiten vorliegt oder droht, verändert werden, um das Überschreiten auszugleichen oder dem Überschreiten vorzubeugen. So beeinflussen sich etwa bei einer Kurvenfahrt ein innenliegendes Fahrzeugrad und ein außenliegendes Fahrzeugrad gegenseitig und ein Überschreiten kann durch eine Aktion an dem betreffenden Fahrzeugrad oder eine entgegengesetzte Aktion an dem gegenüberliegenden Fahrzeugrad ausgeglichen werden.

Die Veränderung des Drehmoments wird bei einem Einzelradantrieb durch eine Beeinflussung eines diesem zugeordneten Element, wie einer Antriebsvorrichtung oder einem Getriebe, umgesetzt. Bei einem Antrieb, der auf mehrere Fahrzeugräder wirkt, wird eine Veränderung des Drehmoments an einem Fahrzeugrad beispielsweise durch eine Beeinflussung einer Antriebsvorrichtung, eines Getriebes oder eines Differenzials erreicht.

In einer bevorzugten Ausgestaltung dieser Ausführungsform wird ein Drehmoment an einem Fahrzeugrad reduziert und gleichzeitig ein Drehmoment an einem anderen Fahrzeugrad erhöht. Auf diese Weise wird beispielsweise während einer Kurvenfahrt ein Fahrzeugrad, bei dem ein Überschreiten vorliegt oder droht, mehrfach entlastet, da die Last auf sich gegenüberliegenden Fahrzeugrädern bei der Kurvenfahrt miteinander korrespondiert. Ein so ausgestaltetes Verfahren kann weiterhin beispielsweise auch bei der Fahrt auf stark unebenem Untergrund zu einem besonders guten Fahrverhalten führen.

In einer bevorzugten Ausführungsform eines Verfahrens nach dem ersten oder zweiten Erfindungsaspekt ist eine Aktion ein Bremseingriff an einem Fahrzeugrad, insbesondere an einem Fahrzeugrad, an dem ein Überschreiten des Maximal-Fahrzeugwert durch den Ist-Fahrzeugwert vorliegt oder droht. Ein solcher Bremseingriff kann je nach Fahrsituation zu einer Entlastung des Fahrzeugrads führen, so dass ein Überschreiten ausgeglichen oder vermieden wird. Ebenso wie eine Veränderung des Drehmoments ist ein Bremseingriff auch bei einem mit dem Fahrzeugrad, an dem ein Überschreiten vorliegt oder droht, korrespondierenden Fahrzeugrad möglich. Ein Bremseingriff kann ferner auch einhergehen mit einer Veränderung des Drehmoments an dem gleichen oder einem anderen Fahrzeugrad.

Ein Bremseingriff wird beispielsweise durch das Aktivieren einer an einem Fahrzeugrad, an einem Einzelradantrieb oder in einem Antriebsstrang angeordneten Bremse oder durch eine elektrische Maschine an einem Einzelradantrieb oder in einem Antriebsstrang mittels Rekuperation realisiert.

In einer bevorzugten Ausführungsform eines Verfahrens nach dem ersten oder zweiten Erfindungsaspekt wird
a. in einem ersten Schritt eine Veränderung eines Drehmomentes an einem Fahrzeugrad ausgeführt und
b. in einem zweiten Schritt ein Bremseingriff an einem Fahrzeugrad als Aktion erst dann ausgeführt, wenn nach dem ersten Schritt, insbesondere nach einer ersten definierten Zeitspanne, über die der erste Schritt ausgeführt wurde, der Ist-Fahrzeugwert den Maximal-Fahrzeugwert weiterhin überschreitet oder ein Überschreiten weiterhin droht.

Erster und zweiter Schritt sind so zu verstehen, dass diese jeweils Schritte in dem Verfahrensablauf darstellen, die im Zuge der vorgenannten Schritte in jeder Schleife oder jeweils bei einer bestimmten Wiederholungszahl von Schleifen durchgeführt werden. Zuerst wird also der erste Schritt in das Verfahren eingefügt und unter der vorgenannten Bedingung durch den zweiten Schritt in dem Verfahren ersetzt oder ergänzt. In dem ersten Schritt wird dabei insbesondere die Intensität der Veränderung insbesondere über die erste Zeitspanne erhöht, also das Drehmoment erhöht bzw. reduziert. Es wird also das Verfahren mehrfach durchlaufen und der erste Schritt wird bei jedem Durchlauf durchgeführt. Erst, wenn sich keine Veränderung des Überschreitens oder des drohenden Überschreitens ergibt, wird der zweite Schritt zusätzlich oder ergänzend ausgeführt.

Mit dem so gestalteten Verfahren wird eine Veränderung des Drehmoments als Aktion gegenüber dem Bremseingriff bevorzugt. Es wird also zuerst angestrebt, dem Überschreiten oder drohende Überschreiten möglichst mit einer Drehzahlveränderung entgegenzuwirken, bevor ein Bremseingriff überhaupt durchgeführt werden kann. Eine Veränderung des Drehmoments kann dabei gegenüber einem Bremseingriff weniger spürbar und/oder energieeffizienter sein, je nach Ausgestaltung des Kraftfahrzeugs und Fahrsituation.

In einer bevorzugten Ausführungsform eines Verfahrens nach dem ersten oder zweiten Erfindungsaspekt ist eine Aktion ein Zuschalten einer Antriebsvorrichtung. Auf diese Weise ist die zur Verfügung stehende gesamte Antriebsleistung erhöht und kann je nach Anordnung der in Betrieb befindlichen Antriebsvorrichtungen für ein stabiles und sicheres Fahrverhalten des Kraftfahrzeugs zwischen den Fahrzeugrädern verteilt werden.

Besonders bevorzugt treibt die zugeschaltete Antriebsvorrichtung ein Fahrzeugrad an, das vor dem Zuschalten der Antriebsvorrichtung nicht angetrieben war. Auf diese Weise kann beispielsweise ein weiteres Fahrzeugrad oder Fahrzeugradpaar eine Antriebslast an den Fahruntergrund übertragen, so dass sich die in einer Fahrsituation insgesamt aufzubringende Antriebslast auf mehr Fahrzeugräder verteilt. Die vor der Aktion angetriebenen Fahrzeugräder werden so entlastet und es wird ein stabileres und sichereres Fahrverhalten des Kraftfahrzeugs erreicht.

Weiterhin bevorzugt wird
a. vor dem Zuschalten der Antriebsvorrichtung der Ist-Fahrzeugwert an den vorher angetriebenen Fahrzeugrädern ermittelt und
b. nach dem Zuschalten der Antriebsvorrichtung der Ist-Fahrzeugwert an den vor dem Zuschalten der Antriebsvorrichtung angetriebenen Fahrzeugrädern sowie an dem durch die zugeschaltete Antriebsvorrichtung angetriebenen Fahrzeugrädern ermittelt.

Das Verfahren nach dem ersten oder zweiten Erfindungsaspekt wird somit nach dem Zuschalten der Antriebsvorrichtung auch auf die dann erst angetriebenen Fahrzeugräder angewendet, um auch bei diesen ein sicheres und stabiles Fahrverhalten zu erreichen.

Bevorzugt wirkt die zugeschaltete Antriebsvorrichtung auf eine Radwelle und treibt ein Fahrzeugfrontrad, insbesondere beide Fahrzeugfronträder an. Insbesondere wirkt die Antriebsvorrichtung über ein Differenzial auf zwei jeweils einem Fahrzeugfrontrad zugeordnete Radwellen, die insbesondere koaxial zueinander angeordnet sind. In einer Ausgestaltung einer solchen Ausführungsform wirken die Einzelradantriebe auf zwei Fahrzeugheckräder und durch Zuschalten der Antriebsvorrichtung an der Radwelle ist ein Allradantrieb geschaffen, mit dem sich ein besonders stabiles und sicheres Fahrverhalten auch auf sehr anspruchsvollen Untergründen erreichen lässt. Weiterhin bevorzugt ist die zugeschaltete Antriebsvorrichtung an der Radwelle eine elektrische Maschine.

In der vorgenannten Ausführungsform wird bevorzugt
a. in einem ersten Schritt eine Veränderung eines Drehmomentes und/oder ein Bremseingriff an einem Fahrzeugrad ausgeführt und
b. in einem zweiten Schritt das Zuschalten der Antriebsvorrichtung als Aktion erst dann ausgeführt, wenn nach dem ersten Schritt, insbesondere nach einer zweiten definierten Zeitspanne, über die der erste Schritt ausgeführt wurde, der Ist-Fahrzeugwert den Maximal-Fahrzeugwert weiterhin überschreitet oder ein Überschreiten weiterhin droht.

Erster und zweiter Schritt sind so zu verstehen, dass diese jeweils Schritte in dem Verfahrensablauf darstellen, die im Zuge der vorgenannten Schritte in jeder Schleife oder jeweils bei einer bestimmten Wiederholungszahl von Schleifen durchgeführt werden. Zuerst wird also der erste Schritt in das Verfahren eingefügt und unter der vorgenannten Bedingung durch den zweiten Schritt in dem Verfahren ersetzt oder ergänzt. In dem ersten Schritt wird dabei insbesondere die Intensität der Veränderung und /oder des Bremseingriffs insbesondere über die zweite Zeitspanne erhöht, also das Drehmoment immer weiter erhöht bzw. reduziert und/oder der Bremseingriff immer weiter verstärkt. Es wird also das Verfahren mehrfach durchlaufen und der erste Schritt wird bei jedem Durchlauf durchgeführt. Erst, wenn sich keine Veränderung des Überschreitens oder des drohenden Überschreitens ergibt, wird der zweite Schritt zusätzlich oder ergänzend ausgeführt. In einer weiteren Ausgestaltung können innerhalb des ersten Schrittes die Veränderung des Drehmoments und der Bremseingriff in beliebiger Reihenfolge gegenüber einander bevorzugt sein. Insbesondere kann in dem ersten Schritt die Veränderung des Drehmoments wie vorbeschrieben gegenüber dem Bremseingriff bevorzugt sein.

Mit dem so gestalteten Verfahren wird eine Veränderung des Drehmoments und/oder ein Bremseingriff als Aktion gegenüber dem Zuschalten der Antriebsvorrichtung bevorzugt. Es wird also zuerst angestrebt, dem Überschreiten oder drohende Überschreiten möglichst mit einer Drehzahlveränderung und/oder einem Bremseingriff entgegenzuwirken, bevor das Zuschalten der Antriebsvorrichtung durchgeführt wird. Eine Veränderung des Drehmoments und/oder ein Bremseingriff können dabei gegenüber einem Zuschalten der Antriebsvorrichtung energieeffizienter sein, je nach Ausgestaltung des Kraftfahrzeugs und Fahrsituation.

Die Ist-Fahrzeugdaten umfassen in einer bevorzugten Ausführungsform eines Verfahrens nach dem ersten oder zweiten Erfindungsaspekt eine Drehzahl eines Fahrzeugrads. Als umfassen ist dabei zu verstehen, dass die Ist-Fahrzeugdaten Informationen wiedergeben, aus denen diese Größen hervorgehen. Mittels einer Drehzahl ist beispielsweise als Ist-Fahrzeugwert ein Ist-Schlupf ermittelbar.

Weiterhin oder alternativ umfassen die Ist-Fahrzeugdaten bevorzugt eine Drehzahl einer Komponente eines Antriebsstrangs. Aus einer solchen lässt sich beispielsweise die Drehzahl eines zu dem Antriebsstrang gehörenden Fahrzeugrads ermitteln, wobei ein einfacherer Sensor verwendet werden kann oder der Sensor einfacher verbaut sein kann als ein Sensor an dem Fahrzeugrad selbst.

Weiterhin oder alternativ umfassen die Ist-Fahrzeugdaten bevorzugt eine Geschwindigkeit des Kraftfahrzeugs. Aus der Geschwindigkeit des Kraftfahrzeugs und der Drehzahl eines Fahrzeugrads lässt sich beispielsweise der an dem Fahrzeugrad vorliegende Schlupf ermitteln.

Weiterhin oder alternativ umfassen die Ist-Fahrzeugdaten bevorzugt eine Gierrate und/oder eine Rollrate. Aus diesen Raten sind jeweils Rückschlüsse auf eine Fahrsituation des Kraftfahrzeugs ziehbar.

Weiterhin oder alternativ umfassen die Ist-Fahrzeugdaten bevorzugt ein Drehmoment beispielsweise einer Antriebsvorrichtung. Mit Daten zu einem Drehmoment ist beispielsweise die notwendige Intensität einer Drehzahlveränderung bestimmbar, um einem Überschreiten oder drohendem Überschreiten entgegenzuwirken.

Weiterhin oder alternativ umfassen die Ist-Fahrzeugdaten bevorzugt eine Beschleunigung und/oder Bremsverzögerung. Aus diesen Daten sind jeweils Rückschlüsse auf eine Fahrsituation des Kraftfahrzeugs ziehbar.

Entsprechend ist der erste Sensor bevorzugt ein Drehzahl-, Geschwindigkeits-, Kraft- und/oder Beschleunigungssensor, mit dem die vorgenannten Fahrzeugdaten jeweils ermittelt werden können.

Die Fahranforderung ist in einer bevorzugten Ausführungsform eines Verfahrens nach dem zweiten Erfindungsaspekt
a. eine Beschleunigungsanforderung und/oder
b. eine Bremsanforderung und/oder
c. eine Lenkanforderung und/oder
d. eine Gangwechselanforderung und/oder
e. eine Anforderung zum Ändern eines Fahrmodus ist.

Als Fahrmodus wird im Sinne der Erfindung eine Summe aus Fahrzeugeinstellungen, insbesondere Einstellungen der im Kraftfahrzeug verbauten Antriebe, insbesondere Einzelradantriebe verstanden. Ein Fahrmodus kann kurzzeitig aus einer Menge an Fahrmodi ausgewählt und aktiv sein, während er zu einem anderen Zeitpunkt nicht ausgewählt ist. Insbesondere kann das erfindungsgemäße Verfahren in verschiedenen Fahrmodi ausgeführt werden. Es können auch mehrere Fahrmodi, die verschiedene Bereiche der Fahrzeugeinstellungen betreffen, parallel und unabhängig voneinander aktiviert sein. Die Auswahl eines Fahrmodus wird in einer Ausführungsform durch eine Bedienperson des Kraftfahrzeugs manuell durchgeführt. Beispielsweise können der Bedienperson mehrere Fahrmodi zur freien Wahl angeboten sein. Die Auswahl des Fahrmodus kann alternativ oder ergänzend auch durch eine Fahrzeugsteuerung erfolgen. So wird beispielsweise mit einer entsprechenden Sensorik detektiert, wenn eine bestimmte Fahrsituation eintritt und automatisch ein entsprechender Fahrmodus gewählt. Beispielsweise schaltet das Kraftfahrzeug in einen Offroad-Fahrmodus, wenn es detektiert, dass der Fahruntergrund sich von Asphalt zu Schotter o.Ä. ändert. Das Kraftfahrzeug schaltet weiterhin beispielhaft in einen Fahrmodus zur möglichst energieeffizienten Fahrt, wenn detektiert wird, dass es sich in einem Stau befindet.

Alle genannten Arten von Fahranforderungen können Einfluss auf eine Fahrsituation nehmen und dazu führen, dass eine gefährliche Fahrsituation entsteht, in der ein sicheres und stabiles Fahrverhalten nicht sichergestellt ist.

Eine Beschleunigungs- oder Bremsanforderung resultiert beispielsweise aus einer Pedalposition und/oder einer Tempomatregulierung und/oder einem Abstandshaltesystem. Eine Lenkanforderung kann beispielsweise aus einer Lenkradposition und/oder einer Spurhaltregelung und/oder einer Sicherheitseinrichtung resultieren. Eine Gangwechselanforderung resultiert beispielsweise aus einer Betätigung eines Gangwahlhebels oder -schalters und/oder einer Automatikschaltung und/oder einem Kickdown.

In einer Ausführungsform des Verfahrens nach dem zweiten Erfindungsaspekt ist eine Aktion eine Manipulation der Fahranforderung, insbesondere
a. eine Reduzierung einer Beschleunigungsanforderung und/oder
b. eine Winkeländerung einer Lenkanforderung und/oder
c. eine zeitliche Verzögerung oder Verweigerung einer Gangwechselanforderung oder einer Anforderung zum Ändern eines Fahrmodus.

Durch eine solche Manipulation kann ein drohendes Überschreiten vermieden werden, so dass keine gefährliche Fahrsituation entsteht. So kann beispielsweise eine Beschleunigungsanforderung während einer Kurvenfahrt, in der bereits ein oder mehrere Fahrzeugräder nahe dem Maximal-Fahrzeugwert betrieben werden, so weit reduziert werden, dass es nicht zu einem Überschreiten kommt. Eine Winkeländerung einer Lenkanforderung kann insbesondere bei solchen Kraftfahrzeugen in dem Verfahren verwendet werden, in denen Lenkrad und Fahrzeugräder nicht mechanisch miteinander gekoppelt sind, wie etwa bei sogenannten "Steer-by-wire" Systemen.

Entsprechend den vorstehenden Ausführungen ist der zweite Sensor beispielsweise ein Beschleunigungssensor und/oder ein Drehwinkelsensor für eine Komponente einer Lenkung und/oder ein Sensor zum Erfassen eines Gangwechsels oder einer Änderung eines Fahrmodus, mit dem die vorgenannten Fahranforderungen jeweils ermittelt werden können.

In einer bevorzugten Ausführungsform des Verfahrens gemäß dem ersten oder zweiten Erfindungsaspekt wird eine Intensität einer Aktion durch die Auswerteeinheit in Abhängigkeit eines Differenzbetrags und/oder eines Verhältnisses zwischen Ist-Fahrzeugwert und Maximal-Fahrzeugwert bestimmt. Auf diese Weise kann die Aktion so gewählt werden, dass sie gleichzeitig ausreichend intensiv ist, um dem Überschreiten oder dem drohenden Überschreiten des Maximal-Fahrzeugwerts durch den Ist-Fahrzeugwert entgegenzuwirken und gleichzeitig für Insassen des Kraftfahrzeugs und insbesondere eine Bedienperson möglichst wenig zu spüren ist.

In einer weiterhin bevorzugten Ausführungsform des Verfahrens gemäß dem ersten oder zweiten Erfindungsaspekt wird eine Aktion ausgeführt, bis ein Ist-Fahrzeugwert ermittelt wird, der den Maximal-Fahrzeugwert um einen ausreichenden Differenzbetrag unterschreitet und die Aktion dann aufgehoben. Auf diese Weise ist sichergestellt, dass nach dem Aufheben der Aktion nicht unmittelbar wieder ein Überschreiten des Maximal-Fahrzeugwerts durch den Ist-Fahrzeugwert droht, die Aktion ist gleichzeitig auf eine minimale Zeit begrenzt. Besonders bevorzugt wird die Aktion aufgehoben, wenn der Ist-Fahrzeugwert den Maximal-Fahrzeugwert über die Dauer einer dritten definierten Zeitspanne um den ausreichenden Differenzbetrag unterschreitet.

In einer weiterhin bevorzugten Ausführungsform des Verfahrens gemäß dem ersten oder zweiten Erfindungsaspekt ist der Maximal-Fahrzeugwert, der insbesondere der Maximal-Schlupf ist, für jedes angetriebene Fahrzeugrad gleich und festgelegt. Ein solcher festgelegter Maximal-Fahrzeugwert ist dann auf der Auswerteinheit hinterlegt und muss zu keinem Zeitpunkt berechnet werden.

Alternativ ist der Maximal-Fahrzeugwert für zwei angetriebene Fahrzeugräder unterschiedlich und festgelegt. Der Maximal-Fahrzeugwert ist dann auf die Ausgestaltung des Kraftfahrzeugs, beispielsweise auf die Verteilung von Antriebsleistung auf die Antriebsvorrichtungen, angepasst, muss jedoch weiterhin zu keinem Zeitpunkt berechnet werden.

Alternativ ist der Maximal-Fahrzeugwert abhängig von einem Ist-Fahrzeugwert und/oder einer Fahrsituation und/oder eine Fahranforderung. Der Maximal-Fahrzeugwert wird dann beispielsweise von der Regeleinheit berechnet und kann auf Ist-Fahrzeugwerte, Fahrsituationen und/oder Fahranforderungen angepasst werden. So ist beispielsweise in einer bestimmten Fahrsituation ein höherer Maximal-Fahrzeugwert tolerierbar, während in einer anderen Fahrsituation nur ein geringerer Maximal-Fahrzeugwert tolerierbar ist, um eine gefährliche Fahrsituation zu verhindern. Auf diese Weise kann beispielsweise für jede Fahrsituation und bei jeder Fahranforderung ein möglichst hoher Maximal-Fahrzeugwert gewählt werden, um die notwendige Anzahl an Eingriffen in das Fahrverhalten des Kraftfahrzeugs in Form einer Aktion möglichst gering zu halten.

Neben den vorgenannten Ist-Fahrzeugwerten und Fahranforderungen kann der Maximal-Fahrzeugwert beispielsweise von einem Fahrmodus und/oder einem Ist-Schlupf eines weiteren Fahrzeugrads abhängig sein.

Besonders bevorzugt ist in einer Ausführungsform des Verfahrens gemäß dem ersten oder zweiten Erfindungsaspekt der Maximal-Fahrzeugwert ein Maximal-Schlupf und liegt zwischen einem unteren Grenzwert von 1,6, 1,7, 1,8, oder 1,9% und einem oberen Grenzwert von 2,1, 2,2, 2,3 oder 2,4% oder zwischen einer Kombination dieser Grenzwerte, die abhängig von einem Ist-Fahrzeugwert und/oder einer Fahrsituation und/oder eine Fahranforderung situativ festgelegt wird. Oberhalb der genannten Bereiche wird für übliche Fahrzeugräder erwartet, dass sich das Fahrverhalten deutlich verschlechtert. So gehen oberhalb dieser Bereiche etwa die Traktion und/oder die Seitenführungsfähigkeit des Fahrzeugrads zurück. Als Schlupf wird dabei sowohl eine positive als auch eine negative Differenz zwischen zwei Drehzahlen verstanden, also eine Differenz, bei der die erste Drehzahl größer als die zweite, aber auch eine Differenz, bei der die erste Drehzahl kleiner als die zweite ist. Bei den angegebenen Werten für den Schlupf wird auf eine Unterscheidung im Sinne eines Vorzeichens zur besseren Übersicht verzichtet. Die Werte sind somit als Betrag zu verstehen.

Bevorzugt beträgt der Maximal-Schlupf, insbesondere in einer normalen Fahrsituation, 2%. Als normale Fahrsituation wird eine alltäglich im Betrieb des Kraftfahrzeugs auftretende Fahrsituation verstanden, also etwa bei einem PKW die Fahrt über eine Schnellstraße oder Autobahn bei trockenen Wetterverhältnissen. Die Definition einer normalen Fahrsituation kann von dem Fahrzeugtyp und seiner tatsächlichen Verwendung abhängen.

Der dritte Erfindungsaspekt betrifft eine Antriebsregeleinrichtung zur Antriebsregelung eines Kraftfahrzeugs mit Einzelradantrieb an zwei Fahrzeugrädern, insbesondere nach einem vorgenannten Verfahren, umfassend
a. einen ersten Sensor zum Erfassen von Ist-Fahrzeugdaten, insbesondere an Fahrzeugrädern,
b. eine Regeleinheit aufweisend eine Auswerteinheit und eine Steuereinheit,
   i. die Auswerteeinheit zum Empfangen und Auswerten der Ist-Fahrzeugdaten, zum Ermitteln eines jeweiligen physikalischen Ist-Fahrzeugwerts aus den Ist-Fahrzeugdaten, zum Vergleich des jeweils ermittelten Ist-Fahrzeugwerts mit einem Maximal-Fahrzeugwert und zum Übermitteln einer Anweisung an die Steuereinheit, sowie
   ii. die Steuereinheit zum Ausführen einer Aktion aufgrund einer übermittelten Anweisung der Auswerteeinheit.

Die hier verwendeten Begriffe sind ebenso zu verstehen, wie bezüglich des ersten Erfindungsaspekts beschrieben.

Mit einer solchen Antriebsregeleinrichtung ist eine Antriebsregelung zu erreichen, mit der ein Kraftfahrzeug mit Einzelradantrieb effektiv und sicher betrieben werden kann. Insbesondere ist mit dieser Antriebsregeleinrichtung ein Verfahren nach dem ersten Erfindungsaspekt mit den vorgenannten Ausgestaltungen und Vorteilen ausführbar.

In einer bevorzugten Ausführungsform der Antriebsregeleinrichtung ist ein zweiter Sensor zum Erfassen einer Fahranforderung vorgesehen und die Auswerteeinheit zum Empfangen und Auswerten der Fahranforderung eingerichtet. Die hier verwendeten Begriffe sind ebenso zu verstehen, wie bezüglich des zweiten Erfindungsaspekts beschrieben. Vorteilhaft ist mit einer so gestalteten Ausführungsform ein Verfahren nach dem ersten und/oder zweiten Erfindungsaspekt mit den vorgenannten Ausgestaltungen und Vorteilen ausführbar.

In einer bevorzugten Ausführungsform der Antriebsregeleinrichtung steuert die Steuereinheit eine Antriebsvorrichtung, insbesondere das von der Antriebsvorrichtung abgegebene Drehmoment. Dabei handelt es sich bei der Antriebsvorrichtung insbesondere um eine Antriebsvorrichtung eines Einzelradantriebs. Auf diese Weise kann im Zuge eines Verfahrens zur Antriebsregelung das an einem Fahrzeugrad anliegende Drehmoment beeinflusst werden und als Aktion verändert werden.

In einer weiterhin bevorzugten Ausführungsform der Antriebsregeleinrichtung steuert die Steuereinheit eine Bremse, insbesondere eine Bremse genau eines Fahrzeugrads. Auf diese Weise kann im Zuge eines Verfahrens zur Antriebsregelung die an einem Fahrzeugrad anliegende Bremskraft beeinflusst werden und als Aktion verändert werden.

Der erste Sensor ist beispielsweise ein Drehzahl- Geschwindigkeits- oder Beschleunigungssensor, wobei er dann entsprechende Größen als Ist-Fahrzeugdaten erfasst. Der zweite Sensor ist beispielsweise ein Beschleunigungs- oder Drehwinkelsensor oder ein Sensor zum Erfassen eines Gangwechsels und/oder einer Änderung eines Fahrmodus, wobei er dann entsprechende Fahranforderungen erfasst.

Der vierte Erfindungsaspekt betrifft einen Antriebsstrang für ein Kraftfahrzeug, umfassend
a. zwei Antriebsvorrichtungen, die jeweils genau ein Fahrzeugrad antreiben,
b. eine vorgenannte Antriebsregeleinrichtung nach dem dritten Erfindungsaspekt.

Ein Antriebsstrang wird hier so verstanden, dass er mehrere dem Antrieb des Kraftfahrzeugs dienende Bauteile umfasst, insbesondere eine Antriebsvorrichtung oder mehrere Antriebsvorrichtung und die dazugehörigen abtriebsseitigen Bauteile, mittels denen Energie von der Antriebsvorrichtung bzw. den Antriebsvorrichtungen zu Fahrzeugrädern übertragen wird. Der Antriebsstrang kann alle dem Antrieb dienenden Bauteile an einem Kraftfahrzeug umfassen, unabhängig davon, ob alle diese Bauteile miteinander zusammenwirken oder ob diese in mehreren Antriebsgruppen unterteilt sind. Ein Antriebsstrang im Sinne der Erfindung ist insofern auch so definiert, dass mehrere Antriebsvorrichtungen, die nicht unmittelbar mechanisch in Verbindung stehen oder miteinander wirkverbindbar sind dem gleichen Antriebsstrang zugeordnet sein können. Die Antriebsvorrichtungen müssen insofern nicht miteinander mechanisch verbunden sein, sondern können jeweils für sich beispielsweise auf einer Radachse gelagert sein. So kann etwa an jedem Fahrzeugheckrad jeweils eine Antriebsvorrichtung mit oder ohne eigenem Getriebe angeordnet sein, die grundsätzlich unabhängig voneinander betrieben und gesteuert werden und insbesondere mechanisch nicht miteinander verbunden oder verbindbar sind, aber dem gleichen Antriebsstrang zugeordnet sind.

Vorteilhaft können bei einem Antriebsstrang nach dem vierten Erfindungsaspekt mittels der Antriebsregeleinrichtung die Einzelradantriebe so geregelt werden, dass das Kraftfahrzeug effizient und sicher betrieben werden kann, wobei insbesondere ein Verfahren nach dem ersten und/oder zweiten Erfindungsaspekt verwendet werden können.

In einer bevorzugten Ausführungsform ist jeder Antriebsvorrichtung ein Getriebe zugeordnet. Mittels des jeweiligen Getriebes kann die Antriebsvorrichtung jeweils über einen großen Geschwindigkeitsbereich des Kraftfahrzeugs effizient betrieben werden.

Weiterhin ist es bevorzugt, wenn zwei Fahrzeugheckrädern jeweils eine Antriebsvorrichtung zum Einzelradantrieb zugeordnet ist. Insbesondere sind die den Fahrzeugheckrädern zugeordneten Antriebsvorrichtungen primäre Antriebsvorrichtungen. Als primäre Antriebsvorrichtung wird verstanden, dass diese Antriebsvorrichtungen zum dauerhaften und insbesondere alleinigen Antrieb des Kraftfahrzeugs ausgelegt und vorgesehen sind. Insbesondere ist vorgesehen, dass in einem normalen Fahrmodus nur die primären Antriebsvorrichtungen zum Antrieb des Kraftfahrzeugs aktiv sind. Insofern das Kraftfahrzeug weitere, sekundäre Antriebsvorrichtungen aufweist, werden diese beispielsweise situativ zugeschaltet, sind dann jedoch nicht zum dauerhaften Antrieb des Kraftfahrzeugs vorgesehen. Dementsprechend liegt dann ein Heckantrieb mit den dem Fachmann bekannten Vorteilen vor. Insbesondere entsteht so in vorteilhafterweise ein sportliches Kraftfahrzeug.

Bevorzugt sind die den Fahrzeugheckrädern zugeordneten Antriebsvorrichtungen elektrische Maschinen und/oder Verbrennungsmaschinen und/oder Brennstoffzellen. Die jeweilige Art von Antriebsvorrichtung geht mit dem Fachmann bekannten Vorteilen einher. Besonders bevorzugt sind die Antriebsvorrichtungen elektrische Maschinen, die als Einzelradantriebe besonders kompakt gestaltet sein können und zudem ohne Emissionsausstoß betrieben werden können.

In einer bevorzugten Ausführungsform des Antriebsstrangs ist einer Radwelle, die auf zwei Fahrzeugfronträder wirkt, eine weitere Antriebsvorrichtung zum Antrieb der zwei Fahrzeugfronträder zugeordnet. Dabei handelt es sich insbesondere um eine sekundäre Antriebsvorrichtung. Als sekundäre Antriebsvorrichtung wird verstanden, dass diese im Großteil aller Fahrsituationen nicht zum Antrieb beiträgt, aber grundsätzlich zum Antrieb befähigt ist und in einzelnen Fahrsituation unterstützend daran mitwirkt. Vorteilhaft sind in Kombination mit an den Fahrzeugheckrädern angeordneten Einzelradantrieben Antriebsvorrichtungen an allen Fahrzeugrädern angeordnet, so dass das Kraftfahrzeug zum Allradantrieb befähigt ist, ohne dass dazu ein Antriebsstrang auf mehrere Fahrzeugradpaare wirken müsste, was üblicherweise mit einer komplexen und teuren Gestaltung dieses Antriebsstrangs einhergehen würde.

Besonders bevorzugt ist die weitere Antriebsvorrichtung eine elektrische Maschine, insbesondere ein Asynchronmotor, die rekuperationsfähig ist. Unter dem Begriff Rekuperation wird verstanden, dass mechanische Energie des Kraftfahrzeugs in eine andere, nutzbare Energieform, insbesondere elektrische Energie, gewandelt und so das Kraftfahrzeug gebremst wird. Dazu wird bei der Rekuperation die elektrische Maschine mit einem Fahrzeugrad gekoppelt und durch dieses als Generator angetrieben. Durch die Zuordnung der Rekuperationsfunktion zu der weiteren Antriebsvorrichtung kann diese für eine effiziente Rekuperation ausgelegt werden, ohne dass die Einzelradantriebe dazu ausgelegt werden müssen.

In einer alternativen Ausführungsform ist zwei Fahrzeugfronträdern jeweils eine weitere Antriebsvorrichtung zum Einzelradantrieb zugeordnet. Dabei handelt es sich insbesondere um sekundäre Antriebsvorrichtungen. Auch mit als Einzelradantrieb ausgebildeten Antriebsvorrichtungen an den Fahrzeugfronträdern ist das Kraftfahrzeug bei primären Einzelradantrieben an den Fahrzeugheckrädern vorteilhaft zum Allradantrieb befähigt.

Besonders bevorzugt sind die weitere Antriebsvorrichtung elektrische Maschinen, die rekuperationsfähig sind. Durch die Zuordnung der Rekuperationsfunktion zu den weiteren Antriebsvorrichtungen können diese für eine effiziente Rekuperation ausgelegt werden, ohne dass die Einzelradantriebe dazu ausgelegt werden müssen.

Der fünfte Erfindungsaspekt betrifft ein Kraftfahrzeug mit einem ersten und einem zweiten Fahrzeugräderpaar und mit einem vorgenannten Antriebsstrang. Mit einem solchen Kraftfahrzeug können die vorgenannten Vorteile des Antriebsstrangs erzielt werden.

Weitere Vorteile, Besonderheiten und zweckmäßige Weiterbildungen der Erfindung ergeben sich aus der nachfolgenden Darstellung bevorzugter Ausführungsbeispiele anhand der Abbildungen. Dabei zeigt
- Fig. 1: ein Verfahrensschaubild eines Verfahrens nach dem ersten Erfindungsaspekt;
- Fig. 2: ein Verfahrensschaubild eines Verfahrens nach dem zweiten Erfindungsaspekt;
- Fig. 3: ein Verfahrensschaubild eines Verfahrens nach dem ersten und/oder zweiten Erfindungsaspekt;
- Fig. 4: in Unteransicht eine stark vereinfachte Ansicht eines Kraftfahrzeugs nach dem fünften Erfindungsaspekt in einer ersten Darstellung;
- Fig. 5: in Unteransicht eine stark vereinfachte Ansicht des Kraftfahrzeugs gemäß Fig. 4 in einer zweiten Darstellung;
- Fig. 6: in Unteransicht eine stark vereinfachte Darstellung eines Kraftfahrzeugs nach dem fünften Erfindungsaspekt.

Die hier gezeigten Ausführungsformen stellen nur Beispiele für die vorliegende Erfindung dar und dürfen daher nicht einschränkend verstanden werden. Alternative durch den Fachmann in Erwägung gezogene Ausführungsformen sind gleichermaßen vom Schutzbereich der vorliegenden Erfindung umfasst.

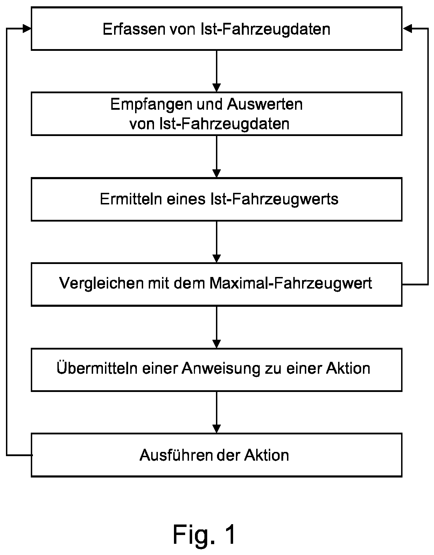

Figur 1 zeigt ein Verfahrensschaubild eines Verfahrens nach dem ersten Erfindungsaspekt. Dabei werden in einem ersten Schritt Ist-Fahrzeugdaten mittels des ersten Sensors erfasst, die anschließend in einem zweiten Schritt von der Auswerteeinheit empfangen und ausgewertet werden. In einem dritten Schritt wird mittels der Auswerteeinheit aus den Ist-Fahrzeugdaten ein Ist-Fahrzeugwert ermittelt, der daraufhin in einem vierten Schritt mit einem Maximal-Fahrzeugwert verglichen wird. Wird dabei ermittelt, dass der Betrag des Ist-Fahrzeugwerts kleiner als der Maximal-Fahrzeugwert ist, so wird die aktuelle Schleife des Verfahrens ohne weiteren Verfahrensschritt beendet und eine neue Schleife beginnt mit dem ersten Schritt. Wird hingegen ermittelt, dass der Betrag des Ist-Fahrzeugwerts größer als der Maximal-Fahrzeugwert ist, so wird in einem fünften Schritt von der Auswerteeinheit eine Anweisung zu einer Aktion an eine Steuereinheit übermittelt, die in einem sechsten Schritt durch die Steuereinheit ausgeführt wird. Daraufhin wird das Verfahren erneut von dem ersten Schritt an in einer nächsten Schleife durchlaufen.

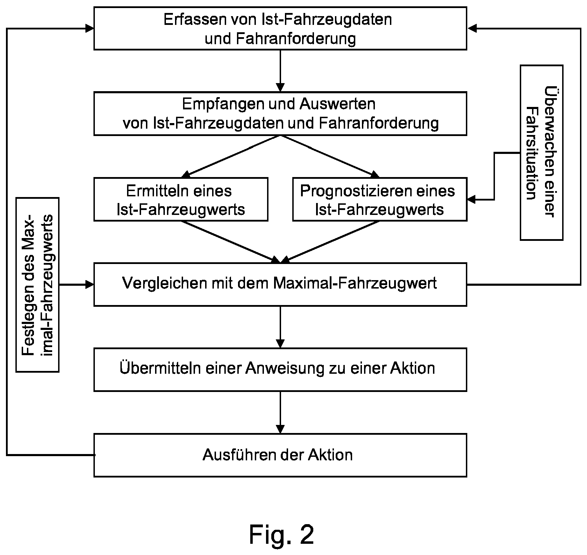

Figur 2 zeigt ein Verfahrensschaubild eines Verfahrens nach dem zweiten Erfindungsaspekt. Dabei werden in einem ersten Schritt Ist-Fahrzeugdaten mittels des ersten Sensors sowie eine Fahranforderung mittels des zweiten Sensors erfasst, die anschließend in einem zweiten Schritt von der Auswerteeinheit empfangen und ausgewertet werden. In einem dritten Schritt wird einerseits mittels der Auswerteeinheit aus den Ist-Fahrzeugdaten ein Ist-Fahrzeugwert ermittelt und andererseits ein Ist-Fahrzeugwert prognostiziert, der sich in Anbetracht der Fahranforderung und aus der Überwachung einer Fahrsituation ergibt. Als Überwachung der Fahrsituation wird beispielsweise ein vorausliegender Fahrabschnitt einer Fahrbahn mittels einer Kamera erfasst und beispielsweise eine bevorstehende Kurvenfahrt erkannt. In einem vierten Schritt wird der ermittelte Ist-Fahrzeugwert und/oder der prognostizierte Ist-Fahrzeugwert mit einem Maximal-Fahrzeugwert verglichen. Dabei wird der Maximal-Fahrzeugwert zuerst festgelegt. Dies kann etwa in jeder Verfahrensschleife, abhängig von einer Fahrsituation oder in regelmäßigen zeitlichen Abständen geschehen. Wird in dem Vergleich ermittelt, dass beide Beträge der Ist-Fahrzeugwerte kleiner als der Maximal-Fahrzeugwert sind, so wird die aktuelle Schleife des Verfahrens ohne weiteren Verfahrensschritt beendet und eine neue Schleife beginnt mit dem ersten Schritt. Wird hingegen ermittelt, dass ein Betrag eines Ist-Fahrzeugwerts größer als der Maximal-Fahrzeugwert ist, so wird in einem fünften Schritt von der Auswerteeinheit eine Anweisung zu einer Aktion an eine Steuereinheit übermittelt, die in einem sechsten Schritt durch die Steuereinheit ausgeführt wird. Daraufhin wird das Verfahren erneut von dem ersten Schritt an in einer nächsten Schleife durchlaufen.

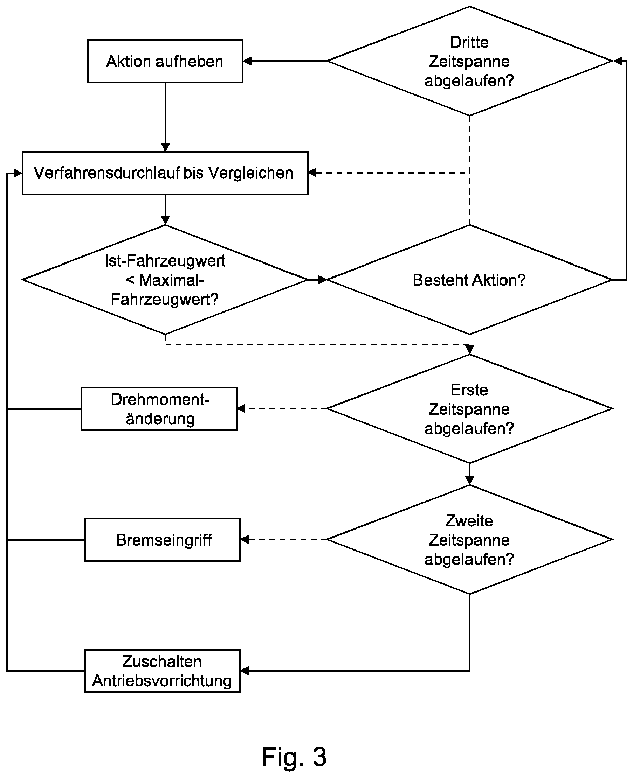

Die vorbeschriebenen Verfahren werden bevorzugt in schneller Folge wiederholt. Ist dabei bereits eine Aktion auf Grund einer Anweisung aus der vorherigen Schleife in ihrer Ausführung inbegriffen, so kann die Anweisung in der aktuellen Schleife aufrechterhalten, in ihrer Intensität geändert oder durch eine andere Aktion ersetzt werden. Figur 3 zeigt ein entsprechendes Verfahrensschaubild. Dazu sei erläutert, dass bei einem rautenförmigen Element des Schaubilds eine gestrichelte abgehende Linie als Verfahrensweg zu verstehen ist, der bei einer Verneinung der in dem rautenförmigen Element gestellten Frage verfolgt wird. Eine durchgehende abgehende Linie wird entsprechend als Verfahrensweg bei einer Zustimmung zu der Frage verstanden.

In Figur 3 werden jeweils zuerst die ersten drei Schritte eines Verfahrens durchgeführt, woraufhin im vierten Schritt der Ist-Fahrzeugwert bzw. die Ist-Fahrzeugwerte mit dem Maximal-Fahrzeugwert verglichen wird bzw. werden. Sind die Ist-Fahrzeugwerte kleiner als die Maximal-Fahrzeugwerte, so wird als nächstes überprüft, ob bereits eine Aktion in der Umsetzung begriffen ist. Ist dies nicht der Fall, wird das Verfahren bei dem ersten Schritt erneut begonnen, ohne dass eine Anweisung zu einer Aktion erfolgt. Ist hingegen eine Aktion in der Ausführung begriffen, so wird überprüft, ob bereits eine dritte Zeitspanne abgelaufen ist. Die dritte Zeitspanne läuft von dem erstmaligen Unterschreiten bei bestehender Aktion und wird so definiert, dass ein Unterschreiten sichergestellt ist, bevor die Aktion aufgehoben wird. Ist die dritte Zeitspanne abgelaufen, wird die bestehende Aktion aufgehoben, andernfalls wird das Verfahren bei bestehender Aktion erneut mit dem ersten Schritt begonnen. An dieser Stelle kann auch ergänzend zu dem Dargestellten eine optionale Änderung der Intensität der Aktion stehen.

Ist der Ist-Fahrzeugwert größer als der Maximum-Fahrzeugwert, so wird überprüft, ob eine erste Zeitspanne abgelaufen ist. Die erste Zeitspanne beginnt, wenn erstmalig eine Drehmomentänderung als Aktion ausgeführt wird. Ist die erste Zeitspanne noch nicht abgelaufen, wird erstmalig oder weiterhin eine Drehmomentänderung als Aktion durchgeführt und das Verfahren vom ersten Schritt an erneut durchlaufen. Eine weitere Durchführung der Drehmomentänderung kann über das Dargestellte hinaus auch mit einer angepassten Intensität geschehen.

Ist die erste Zeitspanne abgelaufen, so wird überprüft, ob eine zweite Zeitspanne abgelaufen ist. Die zweite Zeitspanne beginnt, wenn erstmalig ein Bremseingriff als Aktion ausgeführt wird. Ist die zweite Zeitspanne noch nicht abgelaufen, wird erstmalig oder weiterhin ein Bremseingriff als Aktion durchgeführt und das Verfahren vom ersten Schritt an erneut durchlaufen. Eine weitere Durchführung des Bremseingriffs kann über das Dargestellte hinaus auch mit einer angepassten Intensität geschehen. Ein Bremseingriff kann sowohl ergänzend zu der Drehmomentänderung als Aktion durchgeführt werden oder diese ersetzen, wobei dann die Drehmomentänderung aufgehoben wird.

Ist die zweite Zeitspanne abgelaufen, wird als zusätzliche oder ersetzende Aktion ein Zuschalten einer Antriebsvorrichtung durchgeführt bzw. die bereits zugeschaltete Antriebsvorrichtung in Betrieb gehalten und das Verfahren vom ersten Schritt an erneut durchlaufen.

Die drei Aktionen sind einander insofern in einer Kaskade nachgeordnet. Eine Reihenfolge innerhalb einer Kaskade kann je nach Auslegung, gewähltem Fahrmodus und Fahrsituation unterschiedlich gewählt werden.

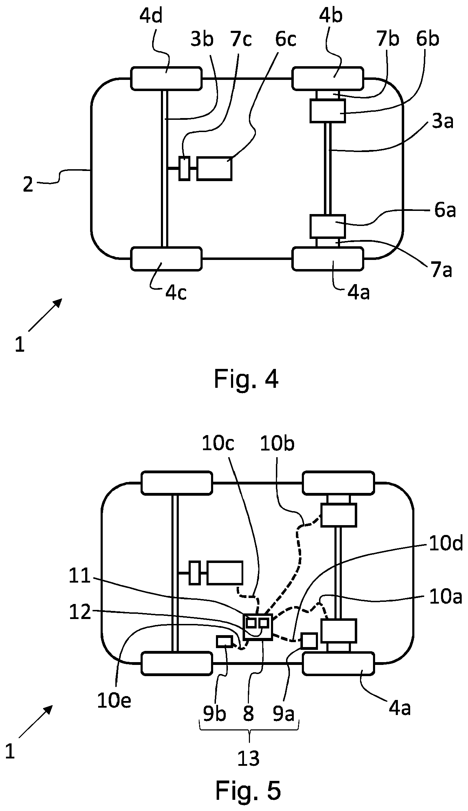

Figur 4 zeigt ein Kraftfahrzeug 1 gemäß der fünften Ausführungsform, das im Wesentlichen aus einer Karosserie 2 besteht, in deren Bodenbereich eine Radachse 3a mit einem ersten Fahrzeugrad 4a und einem zweiten Fahrzeugrad 4b und eine Radwelle 3b mit einem dritten Fahrzeugrad 4c und einem vierten Fahrzeugrad 4d angeordnet ist. Das erste und zweite Fahrzeugrad 4a, 4b sind dabei Fahrzeugheckräder, das dritte und vierte Fahrzeugrad 4c, 4d sind Fahrzeugfronträder.

An der Radachse 3a ist eine erste Antriebsvorrichtung 6a sowie eine zweite Antriebsvorrichtung 6b gelagert, die jeweils Einzelradantriebe sind. Der ersten Antriebsvorrichtung 6a ist ein erstes Getriebe 7a zugeordnet, über das die erste Antriebsvorrichtung 6a auf das erste Fahrzeugrad 4a wirkt. Der zweiten Antriebsvorrichtung 6b ist ein zweites Getriebe 7b zugeordnet, über dass die zweite Antriebsvorrichtung 6b auf das zweite Fahrzeugrad 4b wirkt. An der Radwelle 3b greift eine dritte Antriebsvorrichtung 6c über ein drittes Getriebe 7c an. Die dritte Antriebsvorrichtung 6c ist mit dem dritten Getriebe 7c antriebswirksam verbunden, wobei das dritte Getriebe 7c antriebswirksam mit der Radwelle 3b verbunden ist.

Figur 5 zeigt das Kraftfahrzeug 1 gemäß Figur 4 mit Darstellung weiterer Elemente, wobei die bereits in Figur 4 bezeichneten Elemente zur besseren Übersicht nicht erneut mit Bezugszeichen versehen sind. Das Kraftfahrzeug 1 weist eine Regeleinheit 8 auf, die über Signalleitungen 10a, 10b, 10c, 10d, 10e mit der ersten Antriebsvorrichtung 6a, der zweiten Antriebsvorrichtung 6b, der dritten Antriebsvorrichtung 6c sowie einem ersten Sensor 9a und einem zweiten Sensor 9b verbunden ist. Der erste Sensor 9a ist dabei ein Drehzahlsensor, der die Drehzahl des ersten Fahrzeugrads 4a erfasst. Der zweite Sensor 9b ist beispielsweise ein Drehwinkelsensor zum Erfassen einer Winkelposition eines Lenkrads, so dass eine Lenkanforderung erfasst werden kann. Die Regeleinheit 8 kann über das Dargestellte hinaus auch mit weiteren Elementen des Kraftfahrzeugs 1 verbunden sein, etwa mit einem der Getriebe 7a, 7b, 7c.

Die Regeleinheit 8 umfasst eine Auswerteeinheit 11 zum Empfangen und Auswerten der Ist-Fahrzeugdaten sowie der Fahranforderung, zum Ermitteln eines physikalischen Ist-Fahrzeugwerts, zum Vergleichen des ermittelten Ist-Fahrzeugwerts mit dem Maximal-Fahrzeugwert und zum Übermitteln einer Anweisung zu einer Aktion. Weiterhin umfasst die Regeleinheit 8 eine Steuereinheit 12 zum Ausführen einer Aktion. Dazu übermittelt die Steuereinheit 12 über Signalleitungen 10a, 10b, 10c, 10d, 10e entsprechende Steuerbefehle an Elemente des Kraftfahrzeugs 1, etwa an eine Antriebsvorrichtung 6a, 6b, 6c.

Die Regeleinheit 8, der erste Sensor 9a und der zweite Sensor 9b bilden zusammen eine Antriebsregeleinrichtung 13 gemäß dem dritten Erfindungsaspekt. Die Antriebsregeleinrichtung 13 bildet zusammen mit der Radachse 3a, der Radwelle 3b, den Antriebsvorrichtungen 6a, 6b, 6c und den Getrieben 7a, 7b, 7c einen erfindungsgemäßen Antriebsstrang nach dem vierten Erfindungsaspekt.

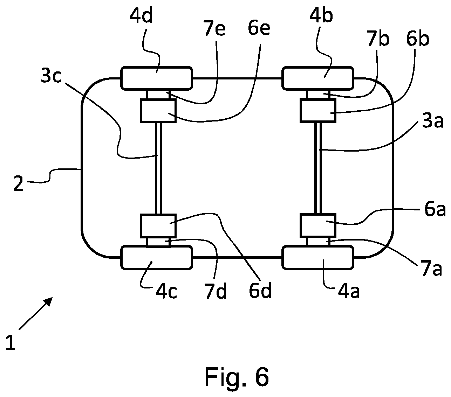

Figur 6 zeigt ein Kraftfahrzeug, dass dem Kraftfahrzeug 1 gemäß Figur 4 im Wesentlichen entspricht. Es weist ebenfalls eine Radachse 3a mit einem ersten Fahrzeugrad 4a und einem zweiten Fahrzeugrad 4b auf, weist aber abweichend statt der Radwelle 3b eine Radachse 3c mit einem dritten Fahrzeugrad 4c und einem vierten Fahrzeugrad 4d auf. Auf der Radachse 3c sind eine vierte Antriebsvorrichtung 6d und ein viertes Getriebe 7d gelagert, die das dritte Fahrzeugrad 4c als Einzelradantrieb antreiben. Weiterhin sind auf der Radachse 3c eine fünfte Antriebsvorrichtung 6e und ein fünftes Getriebe 7e gelagert, die das vierte Fahrzeugrad 4d als Einzelradantrieb antreiben. Es sind in der Ausführungsform gemäß Figur 6 also alle Fahrzeugräder 4a, 4b, 4c, 4d per Einzelradantrieb angetrieben.

### Fahrzeugrädern Liste der verwendeten Bezugszeichen

- 1: Kraftfahrzeug
- 2: Karosserie
- 3a: Radachse
- 3b: Radwelle
- 3c: Radachse
- 4a: erstes Fahrzeugrad
- 4b: zweites Fahrzeugrad
- 4c: drittes Fahrzeugrad
- 4d: viertes Fahrzeugrad
- 6a: erste Antriebsvorrichtung
- 6b: zweite Antriebsvorrichtung
- 6c: dritte Antriebsvorrichtung
- 6d: vierte Antriebsvorrichtung
- 6e: fünfte Antriebsvorrichtung
- 7a: erstes Getriebe
- 7b: zweites Getriebe
- 7c: drittes Getriebe
- 8: Regeleinheit
- 9a: erster Sensor
- 9b: zweiter Sensor
- 10a: erste Signalleitung
- 10b: zweite Signalleitung
- 10c: dritte Signalleitung
- 10d: vierte Signalleitung
- 10e: fünfte Signalleitung
- 11: Auswerteeinheit
- 12: Steuereinheit
- 13: Antriebsregeleinrichtung

## Patentansprüche

1. Verfahren zur Antriebsregelung eines Kraftfahrzeugs (1) mit Einzelradantrieb an zwei Fahrzeugrädern (4a, 4b. 4c, 4d) und einem ersten Sensor (9a) mittels einer Regeleinheit (8), wobei die Regeleinheit (8) eine Auswerteinheit (11) und eine Steuereinheit (12) aufweist, und wobei das Verfahren die Schritte umfasst:
a. Erfassen von Ist-Fahrzeugdaten mittels des ersten Sensors (9a), insbesondere an Fahrzeugrädern (4a, 4b, 4c, 4d),
b. Empfangen und Auswerten der Ist-Fahrzeugdaten mittels der Auswerteeinheit (11), wobei auf der Auswerteeinheit (11) ein Maximal-Fahrzeugwert, insbesondere ein Maximal-Schlupf, hinterlegt ist,
c. Ermitteln eines Ist-Fahrzeugwerts, insbesondere eines Ist-Schlupfs, aus den Ist-Fahrzeugdaten mittels der Auswerteeinheit (11),
d. Vergleichen des ermittelten Ist-Fahrzeugwerts mit dem Maximal-Fahrzeugwert, insbesondere dem Maximal-Schlupf, mittels der Auswerteeinheit (11),
e. Übermitteln einer Anweisung zu einer Aktion von der Auswerteeinheit (11) an die Steuereinheit (12) bei Überschreiten des Maximal-Fahrzeugwerts durch den Ist-Fahrzeugwert,
f. Ausführen der Aktion durch die Steuereinheit (12), **dadurch gekennzeichnet, dass**
der Ist-Fahrzeugwert, insbesondere Ist-Schlupf, je mittels Einzelradantrieb angetriebenen Fahrzeugrad (4a, 4b, 4c, 4d) ermittelt wird und mittels der Auswerteeinheit (11) jeweils mit einem diesem Fahrzeugrad (4a, 4b, 4c, 4d) zugeordneten Maximal-Fahrzeugwert, insbesondere Maximal-Schlupf, verglichen wird, und
eine Aktion eine Veränderung eines Drehmomentes an einem Fahrzeugrad (4a, 4b, 4c, 4d), insbesondere an einem Fahrzeugrad (4a, 4b, 4c, 4d), an dem ein Überschreiten des Maximal-Fahrzeugwerts durch den Ist-Fahrzeugwert vorliegt oder droht, ist, wobei die Veränderung des Drehmoments durch eine Beeinflussung eines dem jeweiligen Einzelradantrieb zugeordneten Element, wie einer Antriebsvorrichtung oder einem Getriebe, umgesetzt wird.

2. Verfahren zur Antriebsregelung eines Kraftfahrzeugs (1) mit Einzelradantrieb an zwei Fahrzeugrädern (4a, 4b, 4c, 4d), einem ersten Sensor (9a) und einem zweiten Sensor (9b) mittels einer Regeleinheit (8), wobei die Regeleinheit (8) eine Auswerteinheit (11) und eine Steuereinheit (12) aufweist, und wobei das Verfahren die Schritte umfasst:
a. Erfassen von Ist-Fahrzeugdaten mittels des ersten Sensors (9a), insbesondere an Fahrzeugrädern (4a, 4b, 4c, 4d),
b. Erfassen einer Fahranforderung mittels des zweiten Sensors (9b),
c. Empfangen und Auswerten der Ist-Fahrzeugdaten sowie der Fahranforderung mittels der Auswerteinheit (11), wobei auf der Auswerteeinheit (11) ein Maximal-Fahrzeugwert, insbesondere Maximal-Schlupf hinterlegt ist,
d. Ermitteln eines physikalischen Ist-Fahrzeugwerts, insbesondere eines Ist-Schlupfs mittels der Auswerteeinheit (11 ),
e. Vergleichen des ermittelten Ist-Fahrzeugwerts mit dem Maximal-Fahrzeugwert, insbesondere dem Maximai-Schlupf, mittels der Auswerteeinheit (11 ),
f. Übermitteln einer Anweisung zu einer Aktion von der Auswerteeinheit (11) an die Steuereinheit (12) bei Überschreiten oder auf Grund der Fahranforderung drohendem Überschreiten des Maximal-Fahrzeugwerts durch den Ist-Fahrzeugwert,
g. Ausführen der Aktion durch die Steuereinheit (12),
**dadurch gekennzeichnet, dass**
der Ist-Fahrzeugwert, insbesondere Ist-Schlupf, je mittels Einzelradantrieb angetriebenen Fahrzeugrad (4a, 4b, 4c, 4d) ermittelt wird und mittels der Auswerteeinheit (11) jeweils mit einem diesem Fahrzeugrad (4a, 4b, 4c, 4d) zugeordneten Maximal-Fahrzeugwert, insbesondere Maximal-Schlupf, verglichen wird, und
eine Aktion eine Veränderung eines Drehmomentes an einem Fahrzeugrad (4a, 4b, 4c, 4d), insbesondere an einem Fahrzeugrad (4a, 4b, 4c, 4d), an dem ein Überschreiten des Maximal-Fahrzeugwerts durch den Ist-Fahrzeugwert vorliegt oder droht, ist, wobei die Veränderung des Drehmoments durch eine Beeinflussung eines dem jeweiligen Einzelradantrieb zugeordneten Element, wie einer Antriebsvorrichtung oder einem Getriebe, umgesetzt wird.

3. Verfahren nach Anspruch 2, ***dadurch gekennzeichnet, dass*** von der Auswerteeinheit (11) an die Steuereinheit (12) eine Anweisung zu einer Aktion übermittelt wird, wenn ein Überschreiten des Maximal-Fahrzeugwerts durch den Ist-Fahrzeugwert auf Grund einer bevorstehenden Änderung einer Fahrsituation des Kraftfahrzeugs droht.

4. Verfahren nach einem der vorhergehenden Ansprüche, ***dadurch gekennzeichnet, dass*** das Verfahren, insbesondere mehrfach pro Sekunde, wiederholt wird und ohne Durchführen einer Aktion emeut ausgeführt wird, wenn der Ist-Fahrzeugwert den Maximal-Fahrzeugwert ausreichend unterschreitet.

5. Verfahren nach einem der vorhergehenden Ansprüche, ***dadurch gekennzeichnet, dass*** nach dem Ausführen einer Aktion über eine definierte Zeitspanne
a. bei weiterhin bestehendem Überschreiten oder weiterhin drohendem Überschreiten des Maximal-Fahrzeugwerts durch den Ist-Fahrzeugwert eine Anweisung zu einer weiteren Aktion von der Auswerteeinheit (11) an die Steuereinheit (12) übermittelt wird und
b. die Steuereinheit (12) die weitere Aktion ausführt.

6. Verfahren nach einem der vorhergehenden Ansprüche, ***dadurch gekennzeichnet, dass*** bei der Aktion
a. ein Drehmoment an einem Fahrzeugrad (4a, 4b, 4c, 4d) reduziert wird und gleichzeitig
b. ein Drehmoment an einem anderen Fahrzeugrad (4a, 4b, 4c, 4d) erhöht wird.

7. Verfahren nach einem der vorhergehenden Ansprüche, ***dadurch gekennzeichnet, dass*** eine Aktion ein Bremseingriff an einem Fahrzeugrad (4a, 4b, 4c, 4d), insbesondere an einem Fahrzeugrad (4a, 4b, 4c, 4d), an dem ein Überschreiten des Maximal-Fahrzeugwert durch den Ist-Fahrzeugwert vorliegt oder droht, ist.

8. Verfahren nach Anspruch 7, ***dadurch gekennzeichnet, dass***
a. in einem ersten Schritt eine Veränderung eines Drehmomentes an einem Fahrzeugrad (4a, 4b, 4c, 4d) ausgeführt wird und
b. in einem zweiten Schritt ein Bremseingriff an einem Fahrzeugrad (4a, 4b, 4c, 4d) als Aktion erst dann ausgeführt wird, wenn nach dem ersten Schritt, insbesondere nach einer ersten definierten Zeitspanne, über die der erste Schritt ausgeführt wurde, der Ist-Fahrzeugwert den Maximal-Fahrzeugwert weiterhin überschreitet oder ein Überschreiten weiterhin droht.

9. Verfahren nach einem der vorhergehenden Ansprüche, ***dadurch gekennzeichnet, dass*** eine Aktion ein Zuschalten einer Antriebsvorrichtung (6a, 6b, 6c) ist, vorzugsweise
die zugeschaltete Antriebsvorrichtung (6a, 6b, 6c) ein Fahrzeugrad (4a, 4b, 4c, 4d) antreibt, das vor dem Zuschalten der Antriebsvorrichtung (6a, 6b, 6c) nicht angetrieben war, weiterhin vorzugsweise
a. vor dem Zuschalten der Antriebsvorrichtung (6a, 6b, 6c) der Ist- Fahrzeugwert an den vorher angetriebenen Fahrzeugrädern (4a, 4b, 4c, 4d) ermittelt wird und
b. nach dem Zuschalten der Antriebsvorrichtung (6a, 6b, 6c) der Ist- Fahrzeugwert an den vor dem Zuschalten der Antriebsvorrichtung (6a, 6b, 6c) angetriebenen Fahrzeugrädern (4a, 4b, 4c, 4d) sowie an dem durch die zugeschaltete Antriebsvorrichtung (6a, 6b, 6c) angetriebenen Fahrzeugrädern (4a, 4b, 4c, 4d) ermittelt wird.

10. Verfahren nach Anspruch 9, ***dadurch gekennzeichnet, dass*** die zugeschaltete Antriebsvorrichtung (6a, 6b, 6c) auf eine Radwelle wirkt und ein Fahrzeugfrontrad (4a, 4b, 4c, 4d), insbesondere beide Fahrzeugfronträder (4a, 4b, 4c, 4d) antreibt, und/oder
a. in einem ersten Schritt eine Veränderung eines Drehmomentes und/oder ein Bremseingriff an einem Fahrzeugrad (4a, 4b, 4c, 4d) ausgeführt wird und
b. in einem zweiten Schritt das Zuschalten der Antriebsvorrichtung (6a, 6b, 6c) als Aktion erst dann ausgeführt wird, wenn nach dem ersten Schritt, insbesondere nach einer zweiten definierten Zeitspanne, über die der erste Schritt ausgeführt wurde, der Ist-Fahrzeugwert den Maximal-Fahrzeugwert weiterhin überschreitet oder ein Überschreiten weiterhin droht.

11. Verfahren nach einem der vorhergehenden Ansprüche, ***dadurch gekennzeichnet,* dass** die Ist-Fahrzeugdaten umfassen:
a. eine Drehzahl eines Fahrzeugrads (4a, 4b, 4c, 4d) und/oder
b. eine Drehzahl einer Komponente eines Antriebsstrangs und/oder
c. eine Geschwindigkeit des Kraftfahrzeugs (1) und/oder
d. eine Gierrate und/oder
e. eine Rollrate und/oder
f. ein Drehmoment und/oder
g. eine Beschleunigung und/oder Bremsverzögerung.

12. Verfahren nach einem der Ansprüche 2 bis 11, ***dadurch gekennzeichnet, dass*** eine Aktion eine Manipulation der Fahranforderung ist, insbesondere
a. eine Reduzierung einer Beschleunigungsanforderung und/oder
b. eine Winkeländerung einer Lenkanforderung und/oder
c. eine zeitliche Verzögerung oder Verweigerung einer Gangwechselanforderung oder einer Anforderung zum Ändern eines Fahrmodus.

13. Antriebsregeleinrichtung (13) zur Antriebsregelung eines Kraftfahrzeugs (1) mit Einzelradantrieb an zwei Fahrzeugrädern (4a, 4b, 4c, 4d) nach einem Verfahren gemäß einem der vorhergehenden Ansprüche, umfassend
a. einen ersten Sensor (9a) zum Erfassen von Ist-Fahrzeugdaten, insbesondere an Fahrzeugrädern (4a, 4b, 4c, 4d),
b. eine Regeleinheit (8) aufweisend eine Auswerteinheit (11) und eine Steuereinheit (12),
i. die Auswerteeinheit (11) zum Empfangen und Auswerten der Ist- Fahrzeugdaten, zum Ermitteln eines jeweiligen physikalischen Ist- Fahrzeugwerts aus den Ist-Fahrzeugdaten, zum Vergleich des jeweils ermittelten Ist-Fahrzeugwerts mit einem Maximal-Fahrzeugwert und zum Übermitteln einer Anweisung an die Steuereinheit (12), sowie
ii. die Steuereinheit (12) zum Ausführen einer Aktion aufgrund einer übermittelten Anweisung der Auswerteeinheit (11).

14. Antriebsstrang für ein Kraftfahrzeug (1), umfassend
a. zwei Antriebsvorrichtungen (6a, 6b), die jeweils genau ein Fahrzeugrad (4a, 4b, 4, 4d) antreiben,
b. eine Antriebsregeleinrichtung (13) nach Anspruch 13.

## Claims

1. Method for controlling the drive of a motor vehicle (1) with individual wheel drive at two vehicle wheels (4a, 4b, 4c, 4d) and a first sensor (9a) by means of a control unit (8), wherein the control unit (8) has an evaluation unit (11) and a control unit (12), and wherein the method comprises the steps of:
a. acquiring actual vehicle data by means of the first sensor (9a), in particular at vehicle wheels (4a, 4b, 4c, 4d),
b. receiving and evaluating the actual vehicle data by means of the evaluation unit (11), wherein a maximum vehicle value, in particular a maximum slip, is stored on the evaluation unit (11),
c. determining an actual vehicle value, in particular an actual slip, from the actual vehicle data using the evaluation unit (11),
d. comparing the determined actual vehicle value with the maximum vehicle value, in particular the maximum slip, using the evaluation unit (11),
e. transmitting an instruction for an action from the evaluation unit (11) to the control unit (12) if the actual vehicle value exceeds the maximum vehicle value,
f. executing the action by the control unit (12), **characterized in that**
the actual vehicle value, in particular the actual slip, is determined for each vehicle wheel (4a, 4b, 4c, 4d) driven by individual wheel drive and is respectively compared by means of the evaluation unit (11) with a maximum vehicle value, in particular maximum slip, assigned to this vehicle wheel (4a, 4b, 4c, 4d), and
an action is a change in a torque at a vehicle wheel (4a, 4b, 4c, 4d), in particular at a vehicle wheel (4a, 4b, 4c, 4d) at which the actual vehicle value exceeds or is likely to exceed the maximum vehicle value, the change in torque being implemented by influencing an element assigned to the respective individual wheel drive, such as a drive device or a transmission.

2. Method for controlling the drive of a motor vehicle (1) with individual wheel drive at two vehicle wheels (4a, 4b, 4c, 4d), a first sensor (9a) and a second sensor (9b) by means of a control unit (8), wherein the control unit (8) has an evaluation unit (11) and a control unit (12), and wherein the method comprises the steps of:
a. acquiring actual vehicle data by means of the first sensor (9a), in particular at vehicle wheels (4a, 4b, 4c, 4d),
b. acquiring a driving request by means of the second sensor (9b),
c. receiving and evaluating the actual vehicle data and the driving request by means of the evaluation unit (11), wherein a maximum vehicle value, in particular maximum slip, is stored on the evaluation unit (11),
d. determining an actual physical vehicle value, in particular actual slip, using the evaluation unit (11),
e. comparing the determined actual vehicle value with the maximum vehicle value, in particular the maximum slip, using the evaluation unit (11),
f. transmitting an instruction for an action from the evaluation unit (11) to the control unit (12) if the actual vehicle value exceeds or, due to the driving request, is likely to exceed the maximum vehicle value,
g. executing the action by the control unit (12),
**characterized in that**
the actual vehicle value, in particular the actual slip, is determined for each vehicle wheel (4a, 4b, 4c, 4d) driven by individual wheel drive and is respectively compared by means of the evaluation unit (11) with a maximum vehicle value, in particular maximum slip, assigned to this vehicle wheel (4a, 4b, 4c, 4d), and
an action is a change in a torque at a vehicle wheel (4a, 4b, 4c, 4d), in particular at a vehicle wheel (4a, 4b, 4c, 4d) at which the actual vehicle value exceeds or is likely to exceed the maximum vehicle value, wherein the change in torque is implemented by influencing an element assigned to the respective individual wheel drive, such as a drive device or a transmission.

3. Method according to claim 2, **characterized in that** an instruction for an action is transmitted from the evaluation unit (11) to the control unit (12) if there is a risk of the actual vehicle value exceeding the maximum vehicle value due to an imminent change in the driving situation of the motor vehicle.

4. Method according to one of the preceding claims, **characterized in that** the method is repeated, in particular several times per second, and is executed again without performing an action if the actual vehicle value falls sufficiently below the maximum vehicle value.

5. Method according to one of the preceding claims, **characterized in that**, after executing an action over a defined period of time
a. if the actual vehicle value continues to exceed or continues to be likely to exceed the maximum vehicle value, an instruction for a further action is transmitted from the evaluation unit (11) to the control unit (12), and
b. the control unit (12) executes the further action.

6. Method according to one of the preceding claims, **characterized in that** in the action a. a torque at one vehicle wheel (4a, 4b, 4c, 4d) is reduced and at the same time b. a torque at another vehicle wheel (4a, 4b, 4c, 4d) is increased.

7. Method according to one of the preceding claims, **characterized in that** an action is a braking intervention at a vehicle wheel (4a, 4b, 4c, 4d), in particular at a vehicle wheel (4a, 4b, 4c, 4d) at which the actual vehicle value exceeds or is likely to exceed the maximum vehicle value.

8. Method according to claim 7, **characterized in that**
a. in a first step, a change in a torque is performed at a vehicle wheel (4a, 4b, 4c, 4d) and
b. in a second step, a braking intervention at a vehicle wheel (4a, 4b, 4c, 4d) is executed as an action only if, after the first step, in particular after a first defined period of time during which the first step was performed, the actual vehicle value continues to exceed the maximum vehicle value or continues to be likely to exceed the maximum vehicle value.

9. Method according to one of the preceding claims, **characterized in that** an action is the activation of a drive device (6a, 6b, 6c), preferably
the activated drive device (6a, 6b, 6c) drives a vehicle wheel (4a, 4b, 4c, 4d) that was not driven before the drive device (6a, 6b, 6c) was activated, and further preferably
a. before the drive device (6a, 6b, 6c) is activated, the actual vehicle value is acquired at the previously driven vehicle wheels (4a, 4b, 4c, 4d) and
b. after the drive device (6a, 6b, 6c) is activated, the actual vehicle value is determined at the vehicle wheels (4a, 4b, 4c, 4d) that were driven before the drive device (6a, 6b, 6c) was activated and at the vehicle wheels (4a, 4b, 4c, 4d) driven by the activated drive device (6a, 6b, 6c).

10. Method according to claim 9, **characterized in that** the activated drive device (6a, 6b, 6c) acts on a wheel shaft and drives a front wheel (4a, 4b, 4c, 4d) of the vehicle, in particular both front wheels (4a, 4b, 4c, 4d) of the vehicle, and/or
a. in a first step, a change in a torque and/or a braking intervention is performed at a vehicle wheel (4a, 4b, 4c, 4d) and
b. in a second step, the activation of the drive device (6a, 6b, 6c) is only performed as an action if, after the first step, in particular after a second defined period of time during which the first step was carried out, the actual vehicle value continues to exceed the maximum vehicle value or continues to be likely to exceed it.

11. Method according to one of the preceding claims, **characterized in that** the actual vehicle data comprise:
a. a rotational speed of a vehicle wheel (4a, 4b, 4c, 4d) and/or
b. a rotational speed of a component of a drive train and/or
c. a speed of the motor vehicle (1) and/or
d. a yaw rate and/or
e. a roll rate and/or
f. a torque and/or
g. an acceleration and/or braking deceleration.

12. Method according to one of claims 2 to 11, **characterized in that** an action is a manipulation of the driving request, in particular
a. a reduction in an acceleration request and/or
b. an angular change in a steering request and/or
c. a time delay or refusal of a gear change request or a request to change a driving mode.

13. Drive control device (13) for controlling the drive of a motor vehicle (1) with individual wheel drive at two vehicle wheels (4a, 4b, 4c, 4d) according to a method according to one of the preceding claims, comprising
a. a first sensor (9a) for acquiring actual vehicle data, in particular at vehicle wheels (4a, 4b, 4c, 4d),
b. a control unit (8) having an evaluation unit (11) and a control unit (12),
i. the evaluation unit (11) for receiving and evaluating the actual vehicle data, for determining a respective physical actual vehicle value from the actual vehicle data, for comparing the respectively determined actual vehicle value with a maximum vehicle value, and for transmitting an instruction to the control unit (12), and
ii. the control unit (12) for executing an action based on a transmitted instruction from the evaluation unit (11).

14. Drive train for a motor vehicle (1), comprising
a. two drive devices (6a, 6b), each of which drives exactly one vehicle wheel (4a, 4b, 4, 4d),
b. a drive control device (13) according to claim 13.

## Revendications

1. Procédé de régulation d'entraînement, au moyen d'une unité de régulation (8), d'un véhicule à moteur (1) comprenant un entraînement individuel de roue au niveau de deux roues de véhicule (4a, 4b. 4c, 4d) et un premier capteur (9a), dans lequel l'unité de régulation (8) présente une unité d'évaluation (11) et une unité de commande (12), et dans lequel le procédé comprend les étapes consistant à :
a. enregistrer des données réelles de véhicule au moyen du premier capteur (9a), en particulier au niveau des roues de véhicule (4a, 4b, 4c, 4d),
b. recevoir et évaluer les données réelles de véhicule au moyen de l'unité d'évaluation (11), dans lequel une valeur maximale de véhicule, en particulier un patinage maximal, est stockée sur l'unité d'évaluation (11),
c. déterminer une valeur réelle de véhicule, en particulier un patinage réel, au moyen de l'unité d'évaluation (11) à partir des données réelles de véhicule,
d. comparer la valeur réelle de véhicule déterminée avec la valeur maximale de véhicule, en particulier avec le patinage maximal, au moyen de l'unité d'évaluation (11),
e. transmettre une instruction pour une action de l'unité d'évaluation (11) à l'unité de commande (12) en cas de dépassement de la valeur maximale de véhicule par la valeur réelle de véhicule,
f. mettre en œuvre l'action grâce à l'unité de commande (12), **caractérisé en ce que** la valeur réelle de véhicule, en particulier le patinage réel, est déterminée pour chaque roue de véhicule (4a, 4b, 4c, 4d) entraînée au moyen de l'entraînement individuel de roue et est comparée, au moyen de l'unité d'évaluation (11), respectivement avec une valeur maximale de véhicule associée à ladite roue de véhicule (4a, 4b, 4c, 4d), en particulier avec le patinage maximal, et
une action est une modification d'un couple au niveau d'une roue de véhicule (4a, 4b, 4c, 4d), en particulier au niveau d'une roue de véhicule (4a, 4b, 4c, 4d) au niveau de laquelle un dépassement de la valeur maximale de véhicule par la valeur réelle de véhicule se produit ou menace de se produire, dans lequel la modification du couple est mise en œuvre grâce à l'influence d'un élément associé à l'entraînement individuel de roue respectif, tel qu'un dispositif d'entraînement ou une transmission.

2. Procédé de régulation d'entraînement, au moyen d'une unité de régulation (8), d'un véhicule automobile (1) comprenant un entraînement individuel de roue au niveau de deux roues de véhicule (4a, 4b, 4c, 4d), un premier capteur (9a) et un deuxième capteur (9b), dans lequel l'unité de régulation (8) présente une unité d'évaluation (11) et une unité de commande (12), et dans lequel le procédé comprend les étapes consistant à :
a. enregistrer des données réelles de véhicule au moyen du premier capteur (9a), en particulier au niveau des roues de véhicule (4a, 4b, 4c, 4d),
b. enregistrer une demande de conduite au moyen du deuxième capteur (9b),
c. recevoir et évaluer les données réelles de véhicule ainsi que la demande de conduite au moyen de l'unité d'évaluation (11), dans lequel une valeur maximale de véhicule, en particulier un patinage maximal, est stockée sur l'unité d'évaluation (11),
d. déterminer une valeur physique réelle de véhicule, en particulier un patinage réel, au moyen de l'unité d'évaluation (11),
e. comparer la valeur réelle de véhicule déterminée avec la valeur maximale de véhicule, en particulier avec le patinage maximal, au moyen de l'unité d'évaluation (11),
f. transmettre, de l'unité d'évaluation (11) à l'unité de commande (12), une instruction pour une action en cas de dépassement ou de risque de dépassement de la valeur maximale de véhicule par la valeur réelle de véhicule en raison de la demande de conduite,
g. mettre l'action en œuvre grâce à l'unité de commande (12),
**caractérisé en ce que**
la valeur réelle de véhicule, en particulier le patinage réel, est déterminée pour chaque roue de véhicule (4a, 4b, 4c, 4d) entraînée au moyen de l'entraînement individuel de roue et est comparée, au moyen de l'unité d'évaluation (11), respectivement avec une valeur maximale de véhicule associée à ladite roue de véhicule (4a, 4b, 4c, 4d), en particulier avec le patinage maximal, et
une action est une modification d'un couple au niveau d'une roue de véhicule (4a, 4b, 4c, 4d), en particulier au niveau d'une roue de véhicule (4a, 4b, 4c, 4d) au niveau de laquelle un dépassement de la valeur maximale de véhicule par la valeur réelle de véhicule se produit ou menace de se produire, dans lequel la modification du couple est mise en œuvre grâce à l'influence d'un élément associé à l'entraînement individuel de roue respectif, tel qu'un dispositif d'entraînement ou une transmission.

3. Procédé selon la revendication 2, ***caractérisé en* ce qu**'une instruction pour une action est transmise par l'unité d'évaluation (11) à l'unité de commande (12) en cas de menace de dépassement de la valeur maximale de véhicule par la valeur réelle de véhicule en raison d'une modification imminente d'une situation de conduite du véhicule automobile.

4. Procédé selon l'une quelconque des revendications précédentes, ***caractérisé en ce que* le** procédé est répété, en particulier plusieurs fois par seconde, et est mis en œuvre à nouveau sans mise en œuvre d'une action si la valeur réelle de véhicule est suffisamment inférieure à la valeur maximale de véhicule.

5. Procédé selon l'une quelconque des revendications précédentes, ***caractérisé en* ce qu'après** la mise en œuvre d'une action sur une période de temps définie
a. une instruction pour une action supplémentaire est transmise de l'unité d'évaluation (11) à l'unité de commande (12) en cas de dépassement persistant ou de menace persistante de dépassement de la valeur maximale de véhicule par la valeur réelle de véhicule, et
b. l'unité de commande (12) met en œuvre l'action supplémentaire.

6. Procédé selon l'une quelconque des revendications précédentes, ***caractérisé en ce que**,* lors de l'action
a. un couple au niveau d'une roue de véhicule (4a, 4b, 4c, 4d) est réduit et simultanément
b. un couple au niveau d'une autre roue de véhicule (4a, 4b, 4c, 4d) est augmenté.

7. Procédé selon l'une quelconque des revendications précédentes, ***caractérisé en* ce qu'**une action est une intervention de freinage sur une roue de véhicule (4a, 4b, 4c, 4d), en particulier sur une roue de véhicule (4a, 4b, 4c, 4d) au niveau de laquelle un dépassement de la valeur maximale de véhicule par la valeur réelle de véhicule se produit ou menace de se produire.

8. Procédé selon la revendication 7, **caractérisé en ce que**
a. dans une première étape, une modification du couple est mise en œuvre au niveau d'une roue de véhicule (4a, 4b, 4c, 4d) et
b. dans une deuxième étape, une intervention de freinage sur une roue de véhicule (4a, 4b, 4c, 4d) n'est mise en œuvre en tant qu'action que si, après la première étape, en particulier après une première période définie au cours de laquelle la première étape a été mise en œuvre, la valeur réelle de véhicule continue de dépasser, ou menace toujours de dépasser, la valeur maximale de véhicule.

9. Procédé selon l'une quelconque des revendications précédentes, ***caractérisé en* ce qu'une** action est une mise en marche d'un dispositif d'entraînement (6a, 6b, 6c), le dispositif d'entraînement (6a, 6b, 6c) mis en marche entraînant de manière préférée une roue de véhicule (4a, 4b, 4c, 4d) qui n'était pas entraînée avant la mise en marche du dispositif d'entraînement (6a, 6b, 6c), et de manière préférée
a. avant la mise en marche du dispositif d'entraînement (6a, 6b, 6c), la valeur réelle de véhicule est déterminée au niveau des roues de véhicule (4a, 4b, 4c, 4d) préalablement entraînées, et
b. après la mise en marche du dispositif d'entraînement (6a, 6b, 6c), la valeur réelle de véhicule est déterminée au niveau des roues de véhicule (4a, 4b, 4c, 4d) entraînées avant la mise en marche du dispositif d'entraînement (6a, 6b, 6c) ainsi qu'au niveau des roues de véhicule (4a, 4b, 4c, 4d) entraînées par le dispositif d'entraînement (6a, 6b, 6c) mis en marche.

10. Procédé selon la revendication 9, ***caractérisé en ce que*** le dispositif d'entraînement (6a, 6b, 6c) mis en marche agit sur un arbre de roue et entraîne une roue avant de véhicule (4a, 4b, 4c, 4d), en particulier les deux roues avant de véhicule (4a, 4b, 4c, 4d), et/ou
a. dans une première étape, une modification d'un couple et/ou une intervention de freinage sur une roue de véhicule (4a, 4b, 4c, 4d) est mise en œuvre et
b. dans une deuxième étape, la mise en marche du dispositif d'entraînement (6a, 6b, 6c) n'est mise en œuvre en tant qu'action que si, après la première étape, en particulier après une deuxième période définie au cours de laquelle la première étape a été mise en œuvre, la valeur réelle de véhicule continue de dépasser, ou menace toujours de dépasser, la valeur maximale de véhicule.

11. Procédé selon l'une quelconque des revendications précédentes, ***caractérisé en ce que*** les données réelles de véhicule comprennent :
a. une vitesse de rotation d'une roue de véhicule (4a, 4b, 4c, 4d) et/ou
b. une vitesse de rotation d'un composant d'un groupe motopropulseur et/ou
c. une vitesse du véhicule à moteur (1) et/ou
d. un taux de lacet et/ou
e un taux de roulis et/ou
f. un couple et/ou
g. une accélération et/ou une décélération de freinage.

12. Procédé selon l'une quelconque des revendications 2 à 11, **caractérisé en ce qu'**une action est une manipulation de la demande de conduite, en particulier
a. une réduction d'une demande d'accélération et/ou
b. une modification angulaire d'une demande de direction et/ou
c. un retard temporel ou un refus d'une demande de changement de vitesse ou d'une demande de changement de mode de conduite.

13. Dispositif de régulation d'entraînement (13) permettant de réguler l'entraînement d'un véhicule à moteur (1) comprenant un entraînement individuel de roue au niveau de deux roues de véhicule (4a, 4b, 4c, 4d) selon un procédé selon l'une quelconque des revendications précédentes, comprenant
a. un premier capteur (9a) permettant d'enregistrer des données réelles de véhicule, en particulier au niveau de roues de véhicule (4a, 4b, 4c, 4d),
b. une unité de régulation (8) présentant une unité d'évaluation (11) et une unité de commande (12),
i. l'unité d'évaluation (11) permettant de recevoir et d'évaluer les données réelles de véhicule, permettant de déterminer une valeur physique réelle respective de véhicule à partir des données réelles de véhicule, permettant de comparer la valeur réelle de véhicule respectivement déterminée avec une valeur maximale de véhicule et permettant de transmettre une instruction à l'unité de commande (12), et
ii. l'unité de commande (12) permettant de mettre en œuvre une action en se basant sur une instruction transmise de l'unité d'évaluation (11).

14. Groupe motopropulseur pour un véhicule à moteur (1), comprenant
a. deux dispositifs d'entraînement (6a, 6b), qui entraînent respectivement exactement une roue de véhicule (4a, 4b, 4, 4d),
b. un dispositif de régulation d'entraînement (13) selon la revendication 13.
